# EUROPEAN PATENT APPLICATION

(11) **EP 4 815 599 A1**
(43) Date of publication of application: **30.09.2026**
(21) Application number: 24902739.2
(22) Date of filing: 06.12.2024
(51) Int. Cl.: H04W 72/21, H04W 74/00, H04J 13/10

(54) **COMMUNICATION METHOD AND APPARATUS**

(30) Priority: 15.12.2023 CN 202311739119
(71) Applicant: Huawei Technologies Co., Ltd., Shenzhen, Guangdong 518129 (CN)
(72) Inventor: WANG, Fan, Shenzhen, Guangdong 518129 (CN); FENG, Qi, Shenzhen, Guangdong 518129 (CN); TONG, Wen, Shenzhen, Guangdong 518129 (CN)
(74) Representative: MERH-IP Matias Erny Reichl Hoffmann Patentanwälte PartG mbB
(86) International application number: PCT/CN2024/137622
(87) International publication number: WO 2025/124318

(57) **Abstract**

A communication method and apparatus are provided, to reduce interference between non-orthogonal demodulation reference signal ports and improve transmission performance. The method may include the following steps: A first communication apparatus obtains indication information of a first sequence, where the first sequence is a cubic polynomial exponential sequence, a cubic term coefficient of a cubic polynomial is associated with a quadratic term coefficient of the cubic polynomial, and the quadratic term coefficient of the cubic polynomial is associated with a frequency domain position of the first sequence; and the first communication apparatus may further transmit a first signal, where the first signal is obtained by performing frequency domain resource mapping on the first sequence.

## Description

### CROSS-REFERENCE TO RELATED APPLICATIONS

This application claims priority to Chinese Patent Application No. 202311739119.6, filed with the China National Intellectual Property Administration on December 15, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

In a communication system, a Gold sequence is a common communication sequence. For example, a demodulation reference signal (demodulation reference signal, DMRS) of an orthogonal frequency division multiplexing (orthogonal frequency division multiplexing, OFDM) waveform uses a Gold sequence on which quadrature phase shift keying (quadrature phase shift keying, QPSK) modulation is performed and then frequency domain mapping is performed. Due to poor auto-ambiguity performance of the Gold sequence, orthogonality between DMRS ports is damaged in some cases. In addition, due to poor cross-ambiguity performance of the Gold sequence, interference between non-orthogonal DMRS ports increases. Therefore, in some communication scenarios in which the Gold sequence is used, interference between non-orthogonal DMRS ports increases, causing a reduction in transmission performance.

Therefore, how to improve a communication sequence to reduce interference between non-orthogonal DMRS ports is an urgent problem to be resolved.

### SUMMARY

This application provides a communication method and apparatus, to reduce interference between non-orthogonal DMRS ports and improve transmission performance.

According to a first aspect, a communication method is provided. The method may be implemented by a first communication apparatus. The first communication apparatus may be configured to send a signal. For example, the first communication apparatus may be a terminal device or an access network device (or replaced with a network device like a base station). Alternatively, the first communication apparatus may be a component in a terminal device or a component in an access network device. The component in this application may include, for example, at least one of a chip, a chip system, a processor, a transceiver, a processing unit, or a transceiver unit. For example, an execution body is the first communication apparatus. The communication method provided in this application may include the following steps: The first communication apparatus obtains indication information of a first sequence, where the first sequence is a cubic polynomial exponential sequence, a cubic term coefficient of a cubic polynomial is associated with a quadratic term coefficient of the cubic polynomial, and the quadratic term coefficient of the cubic polynomial is associated with a frequency domain position of the first sequence; and the first communication apparatus may further transmit a first signal, where the first signal is obtained by performing frequency domain resource mapping on the first sequence.

Based on the method shown in the first aspect, the first communication apparatus may determine the first sequence based on the indication information of the first sequence, and send the first signal obtained by performing frequency domain resource mapping on the first sequence. The first sequence may be a Weil exponential sum sequence, that is, a sequence that satisfies an exponential sum theorem, which has better auto-ambiguity and cross-ambiguity characteristics than a Gold sequence. Therefore, if a non-orthogonal anti-frequency-offset DMRS sequence is constructed by using frequency domain resource mapping, interference between non-orthogonal DMRS ports can be reduced, and a DMRS sequence capacity can be improved, thereby improving transmission performance.

In a possible implementation, that the cubic term coefficient of the cubic polynomial is associated with the quadratic term coefficient of the cubic polynomial includes: The cubic term coefficient of the cubic polynomial is related to *λ*, and the quadratic term coefficient of the cubic polynomial is related to a multiple of *λ*, where a value range of *λ* includes an integer greater than or equal to 1 and less than or equal to *P* - 1, and *P* is a maximum prime number that does not exceed a sequence length of the first sequence. Based on this implementation, the first sequence for which frequency domain discontinuous mapping is used has an ideal auto-correlation characteristic in a maximum delay spread range.

In a possible implementation, the quadratic term coefficient of the cubic polynomial is an integer multiple of *λ*. Based on this implementation, a cross-ambiguity function, of the first sequence for which frequency domain discontinuous mapping is used, in a range defined by a maximum delay spread and a maximum Doppler spread satisfies an exponential sum theorem.

In a possible implementation, the first sequence includes a base sequence and an auxiliary sequence, a cubic term of the cubic polynomial exponential sequence is determined based on the base sequence, and at least one of a quadratic term, a linear term, and a constant term of the cubic polynomial exponential sequence is determined based on the auxiliary sequence, where a maximum value of an auto-ambiguity function of the base sequence is $\sqrt{N}$, a maximum value of a cross-ambiguity function of the base sequence does not exceed $2 \sqrt{N}$, a sequence quantity of the base sequence is positively correlated with the sequence length, and *N* represents the sequence length of the first sequence; and a maximum value of a cross-ambiguity function of the auxiliary sequence in a range defined by a maximum delay spread and a maximum Doppler spread is $\sqrt{N}$, and a sequence quantity of the auxiliary sequence is positively correlated with a square of the sequence length. Based on this implementation, the base sequence uses full-domain low ambiguity, and a maximum value of a cross-ambiguity function of the auxiliary sequence in an ambiguity zone is $\sqrt{N}$. Therefore, the first sequence constructed based on the base sequence and the auxiliary sequence has a good auto-ambiguity characteristic and cross-ambiguity characteristic, and can reduce interference between non-orthogonal DMRS ports and improve a DMRS sequence capacity, thereby improving transmission performance.

In a possible implementation, the frequency domain position corresponds to a transmission comb index. For example, the frequency domain position is indicated by using the transmission comb index. Based on this implementation, the first sequence may be mapped based on the transmission comb index, to support frequency domain discontinuous mapping.

In a possible implementation, the cubic term coefficient of the cubic polynomial is $\frac{λ}{P}$, and the quadratic term coefficient of the cubic polynomial is $\frac{3 λ \left[\left(kM+m\right){Δ}_{F}-m\right]}{MP}$, where *P* is the maximum prime number that does not exceed the sequence length of the first sequence, *M* represents a transmission comb quantity, Δ_{F} represents the maximum Doppler spread, *λ* represents a cubic term coefficient index of the cubic polynomial, *k* represents a Doppler domain cyclic shift index, and *m* represents the transmission comb index. Based on this implementation, peak points of the cross-ambiguity function of the first sequence are distributed at equal intervals in Doppler domain.

In a possible implementation, the first sequence *s_{λ,k,l,m}*(*n*) satisfies: ${s}_{λ , k , l , m} \left(n\right) = {e}^{- j 2 π \left\{\frac{λ}{P}{n}^{3}+\frac{3 λ \left[{\left(kM+m\right)}_{{Δ}_{F}}-m\right]}{MP}{n}^{2}+\frac{l {Δ}_{T}}{N}n\right\}} , n = 0 , 1 , … , N - 1 .$

*N* represents the sequence length of the first sequence, Δ_{T} represents the maximum delay spread, *n* represents a symbol position of the first sequence, and *l* represents a delay domain cyclic shift index.

Based on this implementation, the first sequence has an ideal auto-correlation characteristic in a maximum delay spread range.

In a possible implementation, *λ* ∈ {1,2, ..., *P* - 1}, $\left(k∈\left\{0,1,…,\left⌊P/{Δ}_{F}\right⌋-1\right\},m∈\right.$ $\left.\left\{0,1,…,M-1\right\}\right) ∨ \left(k∈\left\{\left⌊P/{Δ}_{F}\right⌋\right\},m∈\left\{0,1,…,\left⌊MP/{Δ}_{F}\right⌋-M\left⌊P/{Δ}_{F}\right⌋-1\right\}\right) , l ∈$ $\left\{0,1,…,\left⌊N/{Δ}_{T}\right⌋-1\right\}$, where V represents logical OR.

Based on this implementation, a sequence capacity of the first sequence is $\left⌊N/{Δ}_{T}\right⌋ ⋅ \left⌊M⋅P/{Δ}_{F}\right⌋ ⋅ \left(P-1\right)$ .

In a possible implementation, the maximum Doppler spread Δ_{F} and the transmission comb quantity *M* satisfy: $3 \left({Δ}_{F}-1\right) / M ∈ ℤ ,$ where 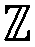 represents an integer.

Based on this implementation, the cross-ambiguity function of the first sequence is applicable to an exponential sum theorem.

In a possible implementation, the first signal is obtained by performing frequency domain resource mapping on the first sequence based on the transmission comb index. Based on this implementation, the first sequence may be mapped based on the transmission comb index to obtain the first signal, to support frequency domain discontinuous mapping.

In a possible implementation, the first signal *s̅_{λ},_{k,l,m}*(*i*) satisfies: ${\overline{s}}_{λ , k , l , m} \left(i\right) = {\sum }_{n = 0}^{N - 1} {s}_{λ , k , l , m} \left(n\right) δ \left(i-nM+m\right) , i = 1 - M , 2 - M , … , M \left(N-1\right) .$

*N* represents the sequence length of the first sequence, *M* represents the transmission comb quantity, *n* represents the symbol position of the first sequence, *λ* represents the cubic term coefficient index of the cubic polynomial, *k* represents the Doppler domain cyclic shift index, *l* represents the delay domain cyclic shift index, m represents the transmission comb index, *δ*(*i*) represents an impulse function, and i represents a subcarrier number.

Based on this implementation, the first signal occupies *MN* frequency domain resources. If a granularity of the frequency domain resource is a subcarrier, the first signal occupies *MN* subcarriers.

In a possible implementation, for a delay spread *τ* and a Doppler spread *v* that satisfy ∀τ ∈ [0, Δ₇ - 1], ∀*v* ∈ [0, Δ_{F} - 1], the first signal includes *s̅*_{*λ*₁*,k*₁*,m*₁}(*i*) and *s̅*_{*λ*₂*,k*₂*,m*₂}(*i*)*,* and a cross-ambiguity function ${A}_{{\overline{s}}_{{λ}_{1} , {k}_{1} , {l}_{1} , {m}_{1}} , {\overline{s}}_{{λ}_{2} , {k}_{2} , {l}_{2} , {m}_{2}}} \left(τ, ν\right)$ of *s̅*_{*λ*₁*,k*₁*,m*₁}(*i*) and *s̅*_{*λ*₂*,k*₂*,m*₂}(*i*) satisfies: $\begin{matrix}\left|{A}_{{\overline{s}}_{{λ}_{1} , {k}_{1} , {l}_{1} , {m}_{1}} , {\overline{s}}_{{λ}_{2} , {k}_{2} , {l}_{2} , {m}_{2}}}\left(τ, ν\right)\right| = \\ \left\{\begin{matrix}N & {λ}_{1} = {λ}_{2} , {k}_{1} = {k}_{2} , {l}_{1} = {l}_{2} , {m}_{1} = {m}_{2} , τ = 0 , ν = 0 \\ 0 & \left[{λ}_{1}={λ}_{2},{k}_{1}={k}_{2},{m}_{1}={m}_{2},ν=0,\left({l}_{1}\neq {l}_{2}\right)∨\left(τ\neq 0\right)\right] ∨ \left[ν\neq \left({m}_{2}-{m}_{1}\right)modM\right] \\ ≅ \sqrt{N} & {λ}_{1} = {λ}_{2} , \left({k}_{1}\neq {k}_{2}\right) ∨ \left({m}_{1}\neq {m}_{2}\right) ∨ \left(ν\neq 0\right) , ν = \left({m}_{2}-{m}_{1}\right) mod M \\ ≲ 2 \sqrt{N} & {λ}_{1} \neq {λ}_{2} , ν = \left({m}_{2}-{m}_{1}\right) mod M\end{matrix}\right. .\end{matrix}$

Based on this implementation, a cross-ambiguity function of the first signal in a range defined by a maximum delay spread and a maximum Doppler spread satisfies an exponential sum theorem.

In a possible implementation, the first communication apparatus may further obtain a first indication, where the first indication corresponds to the transmission comb index. Based on this implementation, a network device may indicate, by using the first indication, the first communication apparatus to implement mapping of the first sequence by using the transmission comb index.

In a possible implementation, the frequency domain position corresponds to a frequency division multiplexing index. For example, the frequency domain position is indicated by using the frequency division multiplexing index. Based on this design, the first sequence may be mapped based on the frequency division multiplexing index, to support frequency domain discontinuous mapping.

In a possible implementation, the cubic term coefficient of the cubic polynomial is $\frac{λ}{P}$, and the quadratic term coefficient of the cubic polynomial is $\frac{3 λ \left[\left(kMQ+mQ+q\right){Δ}_{F}-\left(mQ+q\right)\right]}{MQP}$, where P is the maximum prime number that does not exceed the sequence length of the first sequence, M represents a frequency division multiplexing quantity, Q represents a frequency domain orthogonal cover code length, Δ_{F} represents the maximum Doppler spread, q represents a symbol position of a frequency domain orthogonal cover code, a value range of q includes an integer greater than or equal to 0 and less than or equal to Q - 1, *λ* represents a cubic term coefficient index of the cubic polynomial, *k* represents a Doppler domain cyclic shift index, and *m* represents the frequency division multiplexing index. Based on this implementation, peak points of the cross-ambiguity function of the first sequence are distributed at equal intervals in Doppler domain.

In a possible implementation, the first sequence *s_{λ,k,l,r,m}*(*n, q)* satisfies: $\begin{matrix}{s}_{λ , k , l , r , m} \left(n, q\right) = {e}^{- j 2 π \left\{\frac{λ}{P}{n}^{3}+\frac{3 λ \left[\left(kMQ+mQ+q\right){Δ}_{F}-\left(mQ+q\right)\right]}{MQP}{n}^{2}+\frac{l {Δ}_{T}}{N}n+\frac{rq}{Q}\right\}} , n = 0 , 1 , … , N - 1 , q = \\ 0 , 1 , … , Q - 1 .\end{matrix}$

*N* represents the sequence length of the first sequence, Δ_{T} represents the maximum delay spread, *n* represents a symbol position of the first sequence, *l* represents a delay domain cyclic shift index, and *r* represents a frequency domain orthogonal cover code index.

Based on this implementation, the first sequence has an ideal auto-correlation characteristic in a maximum delay spread range.

In a possible implementation, *λ* ∈ {1,2, ..., *P* - 1}, $\left(k∈\left\{0,1,…,\left⌊P/{Δ}_{F}\right⌋-1\right\},m∈\right.$ $\left.\left\{0,1,…,M-1\right\}\right) ∨ \left(k∈\left\{\left⌊P/{Δ}_{F}\right⌋\right\},m∈\left\{0,1,…,\left⌊MP/{Δ}_{F}\right⌋-M\left⌊P/{Δ}_{F}\right⌋-1\right\}\right) , l ∈$ $\left\{0,1,…,\left⌊N/{Δ}_{T}\right⌋-1\right\} , r ∈ \left\{1,2,…,Q-1\right\}$, where V represents logical OR.

Based on this implementation, a sequence capacity of the first sequence is $Q ⋅ \left⌊N/{Δ}_{T}\right⌋ ⋅ \left⌊M⋅P/{Δ}_{F}\right⌋ ⋅ \left(P-1\right)$ .

In a possible implementation, the maximum Doppler spread Δ_{F}, the frequency division multiplexing quantity *M*, and the frequency domain orthogonal cover code length *Q* satisfy: $3 \left({Δ}_{F}-1\right) / MQ ∈ ℤ ,$ where 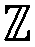 represents an integer.

Based on this implementation, the cross-ambiguity function of the first sequence is applicable to an exponential sum theorem.

In a possible implementation, the first signal is obtained by performing frequency domain resource mapping on the first sequence based on the frequency division multiplexing index and the symbol position of the frequency domain orthogonal cover code. Based on this implementation, the first sequence may be mapped based on the frequency division multiplexing index and the symbol position of the frequency domain orthogonal cover code to obtain the first signal, to support frequency domain discontinuous mapping.

In a possible implementation, the first signal *s̅_{λ,k,l,r,m}*(*i*) satisfies: $\begin{matrix}{\overline{s}}_{λ , k , l , r , m} \left(i\right) = {\sum }_{q = 0}^{Q - 1} {\sum }_{n = 0}^{N - 1} {s}_{λ , k , l , r , m} \left(n, q\right) δ \left(i-nMQ+mQ+q\right) , i = 1 - MQ , 2 - \\ MQ , … , MQ \left(N-1\right) .\end{matrix}$

*N* represents the sequence length of the first sequence, *M* represents the frequency division multiplexing quantity, *Q* represents the frequency domain orthogonal cover code length, *s̅_{λ,k,l,r,m}*(*n, q*) represents the first sequence, *n* represents the symbol position of the first sequence, q represents the symbol position of the frequency domain orthogonal cover code, λ represents the cubic term coefficient index of the cubic polynomial, *k* represents the Doppler domain cyclic shift index, *l* represents the delay domain cyclic shift index, m represents the frequency division multiplexing index, *δ*(*i*) represents an impulse function, and *i* represents a subcarrier number.

Based on this implementation, the first signal occupies *MNQ* frequency domain resources. If a granularity of the frequency domain resource is a subcarrier, the first signal occupies *MNQ* subcarriers.

In a possible implementation, for a delay spread *τ* and a Doppler spread v that satisfy ∀*τ* ∈ [0, Δ_{T} - 1], ∀*v* ∈ [0, Δ_{F} - 1], the first signal includes *s̅*_{*λ*₁*,k*₁*,l*₁,r₁,*m*₁}(*i*) and *s̅*_{*λ*₂*,k*₂*,l*₂,r₂,*m*₂}(*i)*, and a cross-ambiguity function ${A}_{{\overline{s}}_{{λ}_{1} , {k}_{1} , {l}_{1} , {r}_{1} , {m}_{1}} , {\overline{s}}_{{λ}_{2} , {k}_{2} , {l}_{2} , {r}_{2} , {m}_{2}}} \left(τ, ν\right)$ of *s̅*_{*λ*₁*,k*₁*,l*₁,*r*₁,*m*₁}(*i*) and *s̅*_{*λ*₂*,k*₂*,l*₂,r₂,*m*₂}(*i*) satisfies:

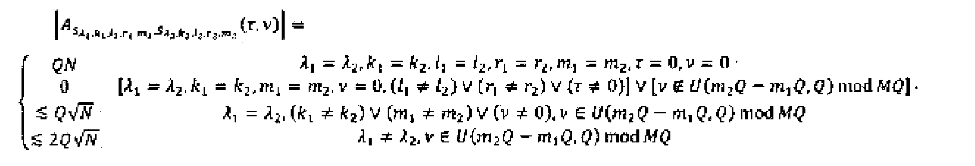

*U*(*m*₂Q *- m*₁*Q, Q)* represents an open interval (*m*₂*Q - m*₁*Q - Q, m₂Q - m*₁*Q + Q).*

Based on this implementation, a cross-ambiguity function of the first signal in a range defined by a maximum delay spread and a maximum Doppler spread satisfies an exponential sum theorem.

In a possible implementation, the first communication apparatus may further receive a second indication, where the second indication corresponds to the frequency division multiplexing index. Based on this implementation, a network device may indicate, by using the second indication, the first communication apparatus to implement mapping of the first sequence by using the frequency division multiplexing index.

In a possible implementation, the first communication apparatus may further obtain a third indication, where the third indication indicates indication information of a sequence and at least one of a corresponding frequency domain orthogonal cover code index, delay domain cyclic shift index, transmission comb index, frequency division multiplexing index, Doppler domain cyclic shift index, cubic term coefficient index of the cubic polynomial, or time domain orthogonal cover code index, and the sequence includes the first sequence.

Based on this implementation, the third indication may indicate a correspondence between the indication information (for example, an antenna port number) of the sequence and at least one of the frequency domain orthogonal cover code index, the delay domain cyclic shift index, the transmission comb index, the frequency division multiplexing index, the Doppler domain cyclic shift index, the cubic term coefficient index of the cubic polynomial, or the time domain orthogonal cover code index. Therefore, the first communication apparatus may determine, based on the indication information of the first sequence, at least one of the frequency domain orthogonal cover code index, the delay domain cyclic shift index, the transmission comb index, the frequency division multiplexing index, the Doppler domain cyclic shift index, the cubic term coefficient index of the cubic polynomial, or the time domain orthogonal cover code index of the first sequence, to determine the first sequence or transmit the first signal based on the at least one of the frequency domain orthogonal cover code index, the delay domain cyclic shift index, the transmission comb index, the frequency division multiplexing index, the Doppler domain cyclic shift index, the cubic term coefficient index of the cubic polynomial, or the time domain orthogonal cover code index.

In a possible implementation, the method further includes:
obtaining indication information of a second sequence, where the indication information of the first sequence and the indication information of the second sequence satisfy at least one of the following:
a frequency domain orthogonal cover code index corresponding to the indication information of the first sequence is different from a frequency domain orthogonal cover code index corresponding to the indication information of the second sequence;
a delay domain cyclic shift index corresponding to the indication information of the first sequence is different from a delay domain cyclic shift index corresponding to the indication information of the second sequence;
a time domain orthogonal cover code index corresponding to the indication information of the first sequence is different from a time domain orthogonal cover code index corresponding to the indication information of the second sequence;
a transmission comb index corresponding to the indication information of the first sequence is different from a transmission comb index corresponding to the indication information of the second sequence;
a frequency division multiplexing index corresponding to the indication information of the first sequence is different from a frequency division multiplexing index corresponding to the indication information of the second sequence;
a Doppler domain cyclic shift index corresponding to the indication information of the first sequence is different from a Doppler domain cyclic shift index corresponding to the indication information of the second sequence; or
a cubic term coefficient index of a cubic polynomial corresponding to the indication information of the first sequence is different from a cubic term coefficient index of a cubic polynomial corresponding to the indication information of the second sequence.

Based on this implementation, different sequences may use at least one of different frequency domain orthogonal cover code indexes, delay domain cyclic shift indexes, time domain orthogonal cover code indexes, transmission comb indexes, frequency division multiplexing indexes, Doppler domain cyclic shift indexes, or cubic term coefficient indexes, to increase a sequence capacity.

In a possible implementation, the first signal corresponds to a first terminal device, and the method further includes:
obtaining indication information of a third sequence corresponding to a second terminal device, where the first terminal and the second terminal belong to a same terminal device group.

Based on this implementation, a plurality of terminal devices in a MU-MIMO group each may obtain indication information of sequences configured by a base station for all terminals in the group, to estimate channel state information of an interfering link, thereby reducing transmission interference between the plurality of terminal devices.

According to a second aspect, a communication method is provided. The method may be implemented by a second communication apparatus. The second communication apparatus may be configured to receive a signal. For example, the second communication apparatus may be a terminal device or an access network device (or replaced with a network device like a base station). Alternatively, the second communication apparatus may be a component in a terminal device or a component in an access network device. The component in this application may include, for example, at least one of a chip, a chip system, a processor, a transceiver, a processing unit, or a transceiver unit. For example, an execution body is the second communication apparatus. The communication method provided in this application may include the following steps: The second communication apparatus obtains indication information of a first sequence, where the first sequence is a cubic polynomial exponential sequence, a cubic term coefficient of a cubic polynomial is associated with a quadratic term coefficient of the cubic polynomial, and the quadratic term coefficient of the cubic polynomial is associated with a frequency domain position of the first sequence; and the second communication apparatus may further transmit a first signal, where the first signal is obtained by performing frequency domain resource mapping on the first sequence.

For each possible implementation of the second aspect, refer to a corresponding possible implementation of the first aspect. Details are not described again.

According to a third aspect, a communication apparatus is provided. The apparatus may implement the method according to any one of the first aspect and the second aspect and the possible implementations of the first aspect and the second aspect. The apparatus has a function of the first communication apparatus or the second communication apparatus. The apparatus is, for example, a terminal device, a functional module in the terminal device, a network device, or a functional module in the network device.

In an optional implementation, the apparatus may include modules that are in one-to-one correspondence with the methods/operations/steps/actions according to any one of the first aspect and the second aspect and the possible implementations of the first aspect and the second aspect. The module may be a hardware circuit or software, or may be implemented by a hardware circuit in combination with software. In an optional implementation, the apparatus includes a processing unit (also referred to as a processing module sometimes) and a communication unit (also referred to as a transceiver module, a communication module, and the like sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, when the apparatus is configured to perform the method described in either of the first aspect and the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect and the second aspect and the possible implementations of the first aspect and the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a fifth aspect, a computer-readable storage medium is provided. The computer-readable storage medium is configured to store a computer program or instructions. When the computer program or the instructions are run, the method according to any one of the first aspect and the second aspect and the possible implementations of the first aspect and the second aspect is implemented.

According to a sixth aspect, a computer program product including instructions is provided. When the computer program product runs on a computer, the method according to any one of the first aspect and the second aspect and the possible implementations of the first aspect and the second aspect is implemented.

According to a seventh aspect, an embodiment of this application further provides a communication apparatus, configured to perform the method according to any one of the first aspect and the second aspect and the possible implementations of the first aspect and the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the sending and receiving functions in the method according to any one of the first aspect and the second aspect and the possible implementations of the first aspect and the second aspect. The logic circuit may be further configured to transmit a message to the input/output interface, or receive, from the input/output interface, a message from another communication apparatus. The chip system may be configured to implement the method according to any one of the first aspect and the second aspect and the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication method is provided. The communication method may include the method implemented by the first communication apparatus according to any one of the first aspect and the possible implementations of the first aspect, or the method implemented by the second communication apparatus according to any one of the second aspect and the possible implementations of the second aspect.

According to a tenth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the tenth aspect, refer to the descriptions of the beneficial effects of the corresponding solutions in the first aspect and the second aspect. Details are not described herein again.

### BRIEF DESCRIPTION OF DRAWINGS

FIG. 1 is a diagram of an architecture of a wireless communication system according to an embodiment of this application;
FIG. 2A and FIG. 2B are diagrams of DMRS communication port configurations according to an embodiment of this application;
FIG. 3 is a diagram of a communication mode according to an embodiment of this application;
FIG. 4 is a diagram of multiplexing a low ambiguity zone of a first sequence according to an embodiment of this application;
FIG. 5 is another diagram of multiplexing a low ambiguity zone of a first sequence according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

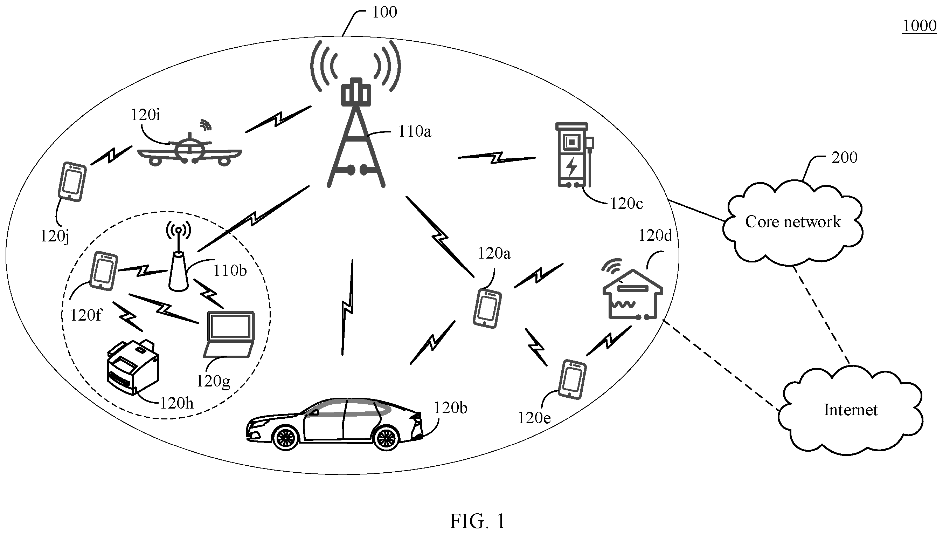

For ease of understanding of embodiments of this application, an application scenario to which this application is applicable is described by using an architecture of a communication system shown in FIG. 1 as an example. FIG. 1 is a diagram of a possible and non-limiting system. As shown in FIG. 1, the communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, 4th generation (4th generation, 4G), long term evolution (long term evolution, LTE), 5th generation (5th generation, 5G), a new radio (new radio, NR) mobile communication system, or an evolved system after 5G (for example, a 6th generation (6th generation, 6G) mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system obtained by combining two or more of the foregoing systems.

An apparatus provided in embodiments of this application may be used in the network device 110 or the terminal device 120. It may be understood that FIG. 1 shows only one possible communication system architecture to which embodiments of this application may be applied. In another possible scenario, the communication system architecture may alternatively include another device.

Another communication system to which embodiments of this application are applied may include a first communication apparatus and a second communication apparatus.

In an implementation method, the first communication apparatus is a network device or a module used in the network device, and the second communication apparatus is a terminal device or a module used in the terminal device. The network device is, for example, an access network device. The first communication apparatus communicates with the second communication apparatus through an air interface.

In another implementation method, the first communication apparatus is a terminal device or a module used in the terminal device, and the second communication apparatus is a network device or a module used in the network device. The first communication apparatus communicates with the second communication apparatus through an air interface.

In another implementation method, the first communication apparatus is a network device or a module used in the network device, and the second communication apparatus is a network device or a module used in the network device. The first communication apparatus communicates with the second communication apparatus through an air interface or in a wired manner.

In another implementation method, the first communication apparatus is a terminal device or a module used in the terminal device, and the second communication apparatus is a terminal device or a module used in the terminal device. The first communication apparatus communicates with the second communication apparatus through an air interface.

Certainly, in embodiments of this application, the first communication apparatus and the second communication apparatus may alternatively be devices of another type. For example, the first communication apparatus may be a device such as a cloud device or a cloud server, and the second communication apparatus is a device such as a cloud device or a cloud server. This is not limited in this application.

In embodiments of this application, the terminal device may be a device having wireless sending and receiving functions, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, and include an indoor or outdoor terminal, a handheld terminal, or a vehicle-mounted terminal; or may be deployed on a water surface (for example, on a ship); or may be deployed in the air (for example, on an aircraft, a balloon, or a satellite). The terminal device may be a cellular phone, a mobile phone (mobile phone), a tablet computer (pad), a wireless data card, a wireless modem, a satellite terminal, a device mounted on a vehicle (for example, a car, a bicycle, an electric vehicle, an airplane, a ship, a train, or a high-speed railway), a mechanical arm, a workshop device, a wearable device (for example, a smart watch, a smart band, or a pedometer), an uncrewed aerial vehicle, a robot, a smart point of sale (point of sale, POS) terminal, customer-premises equipment (customer-premises equipment, CPE), a computer having wireless receiving and sending functions, a virtual reality (virtual reality, VR) terminal device, an augmented reality (augmented reality, AR) terminal device, a terminal device in industrial control (industrial control), a terminal device in self-driving (self-driving), a terminal device in telemedicine (remote medical), a terminal device in a smart grid (smart grid), a terminal in transportation security (transportation safety), a terminal device in a smart city (smart city), or a terminal (for example, a smart home device such as a refrigerator, a television, an air conditioner, or a meter) in a smart home (smart home). The terminal device may alternatively be another device having a terminal function. A device form of the terminal is not limited in embodiments of this application. An apparatus configured to implement a function of the terminal device may be a terminal device, or may be an apparatus, for example, a chip system, that can support the terminal device in implementing the function. The apparatus can be installed in the terminal device, or can match the terminal device for use. In embodiments of this application, the chip system may include a chip, or may include a chip and another discrete component.

In embodiments of this application, the network device is a device having wireless receiving and sending functions, and is configured to communicate with the terminal device or another network device. The network device may alternatively be a device, for example, a radio access network (radio access network, RAN) device or node, that can connect the terminal device to a wireless network. In embodiments of this application, the network device may include various forms of base stations, for example, a base station (base station), an evolved NodeB (evolved NodeB, eNodeB), a next generation NodeB (next generation NodeB, gNB), a macro base station, a micro base station (which is also referred to as a small cell), a relay station, an access point, a device that implements a base station function in a communication system evolved after a 5th generation (5th generation, 5G) technology, an access point (access point, AP) in a wireless local area network (wireless local area network, WLAN) system, an integrated access and backhaul (integrated access and backhaul, IAB) node, a transmitting and receiving point (transmitting and receiving point, TRP), a transmitting point (transmitting point, TP), a mobile switching center, or a device that undertakes a base station function in device-to-device (Device-to-Device, D2D) communication, vehicle-to-everything (vehicle-to-everything, V2X) communication, or machine-to-machine (machine-to-machine, M2M) communication. The network device may alternatively include a network device in a non-terrestrial communication network (non-terrestrial network, NTN) communication system, that is, may be deployed on a high-altitude platform or a satellite. In some possible scenarios, different network devices each implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an open access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

A form of the network device is not limited in embodiments of this application. An apparatus configured to implement a function of the network device may be a network device, or may be an apparatus, for example, a chip system, that can support the network device in implementing the function. The apparatus can be installed in the network device, or can match the network device for use.

It may be understood that in this application, communication between a network device and a terminal device, communication between network devices, and communication between terminal devices may be performed by using a licensed spectrum, or may be performed by using an unlicensed spectrum, or may be performed by using both a licensed spectrum and an unlicensed spectrum. In addition, communication between a network device and a terminal device, communication between network devices, and communication between terminal devices may be performed by using a spectrum below 6 gigahertz (gigahertz, GHz), for example, by using a 700/900 megahertz (megahertz, MHz) or 2.1/2.6/3.5 GHz frequency band, or by using a spectrum above 6 GHz, for example, a millimeter wave or a terahertz (terahertz, THz) wave, or by using both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as smart grid, industrial control, smart transportation, and smart city. The function of the terminal device may alternatively be performed by a module (for example, a chip or a modem) in the terminal device, or may be performed by an apparatus including the function of the terminal device.

In an evolution process of a communication system, a high throughput and massive connectivity have always been core challenges for a wireless communication network. To cope with the foregoing challenges, 5G communication proposes applications such as enhanced mobile broadband (enhanced mobile broadband, eMBB), ultra-reliable and low latency communication (ultra-reliable and low latency communication, URLLC), and massive machine type communication (massive machine type communication, mMTC) as technical objectives. A 6G communication system evolved after 5G definitely evolves toward a higher throughput, a lower latency, higher reliability, a larger quantity of connections, higher spectrum utilization, and the like.

The following explains technical terms related to this application.

### (1) Ambiguity function

Ambiguity functions include two types: an auto-ambiguity function and a cross-ambiguity function.

The auto-ambiguity function refers to an inner product between a signal #A and a signal #B, where the signal #B is a signal obtained by performing delay transformation and Doppler shift transformation on the signal #A.

The cross-ambiguity function refers to an inner product between a signal #C and a signal #B, where the signal #B is a signal obtained by performing delay transformation and Doppler shift transformation on a signal #A, and the signal #A and the signal #C are in a same sequence set.

### (2) Zero ambiguity zone

The zero ambiguity zone means that an ambiguity function is equal to zero within a specific delay range and a specific Doppler range.

### (3) Low ambiguity zone

The low ambiguity zone means that a value of an ambiguity function is less than a preset threshold within a specific delay range and a specific Doppler range.

### (4) Zero correlation zone

The zero correlation zone means that a correlation function is equal to zero within a specific delay range.

### (5) Low correlation zone

The low correlation zone means that a value of a correlation function is less than a preset threshold within a specific delay range.

### (6) Sequence capacity

The sequence capacity refers to a quantity of sequences included in a sequence set.

The following describes a problem addressed in this application.

Currently, in LTE and NR communication systems, a DMRS with an OFDM waveform uses a Gold sequence on which QPSK modulation is performed and then frequency domain mapping is performed. An initial value of the Gold sequence may be determined by using a cell identifier or a scrambling identifier. In an evolution process of a DMRS with an NR OFDM waveform, a maximum of 12 orthogonal DMRS ports, that is, a DMRS port 0 to a DMRS port 11, are supported in release (release, Rel)-15 to Rel-17. The 12 orthogonal DMRS ports use two frequency domain orthogonal cover codes (frequency domain orthogonal cover code, FD-OCC), two time domain orthogonal cover codes (time domain orthogonal cover code, TD-OCC), and three frequency division multiplexing (frequency division multiplexing, FDM). In addition, Rel-18 supports a maximum of 24 orthogonal DMRS ports, that is, a DMRS port 0 to a DMRS port 23. The 24 orthogonal DMRS ports multiplex four FD-OCCs, two TD-OCCs, and three FDMs.

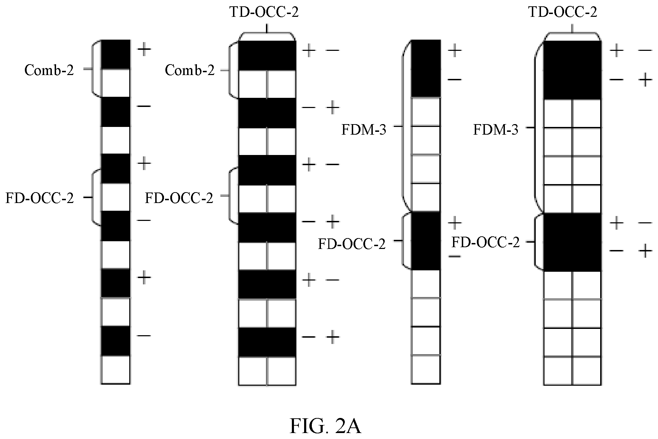

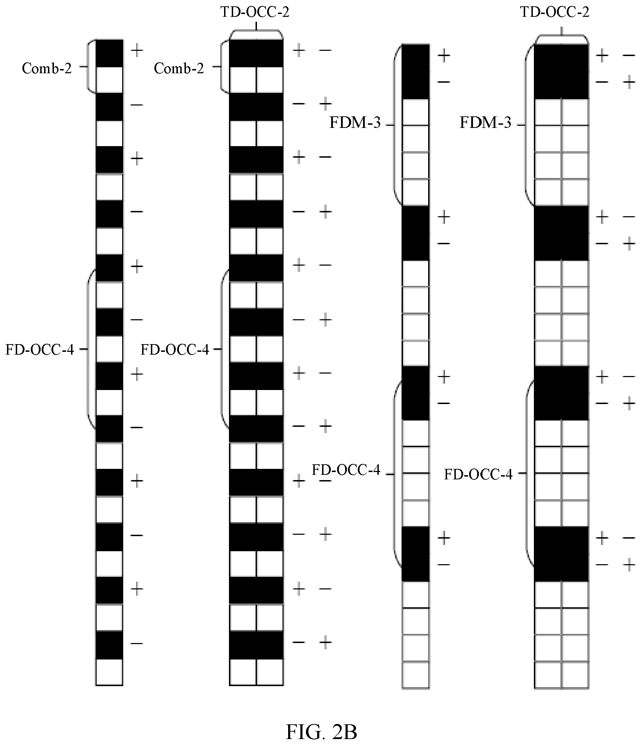

FIG. 2A and FIG. 2B are diagrams of types of DMRS port configurations with an NR OFDM waveform. FIG. 2A corresponds to configuration types supported by Rel-15 to Rel-17, including an NR DMRS configuration type 1 (type 1) and an NR DMRS configuration type 2 (type 2). FIG. 2B corresponds to configuration types supported by Rel-18, including an NR DMRS configuration type 1 and an NR DMRS configuration type 2.

The Gold sequence has good auto-correlation and cross-correlation properties, but auto-ambiguity performance of the Gold sequence and cross-ambiguity performance of the Gold sequence are poor. Poor auto-ambiguity performance is reflected in that a Doppler sidelobe of an auto-ambiguity function of the Gold sequence is relatively large. In a high-speed movement scenario, cyclic shift, transmission comb, orthogonal cover code, or frequency division multiplexing DMRS ports are no longer orthogonal. In other words, a frequency offset caused by a factor such as high speed movement destroys orthogonality between DMRS ports. In addition, a cross-correlation function randomly fluctuates between Gold sequences scrambled by using different initial values, causing relatively strong interference between non-orthogonal DMRS ports. Therefore, the auto-ambiguity performance and the cross-ambiguity performance of the Gold sequence lead to an increase in interference between non-orthogonal DMRS ports in some cases, causing a reduction in transmission performance.

To resolve the foregoing technical problem, this application provides a communication method. The communication method may be implemented by a first communication apparatus and a second communication apparatus. Optionally, the first communication apparatus may serve as a signal transmitter, and the second communication apparatus may serve as a signal receiver. In other words, the first communication apparatus may be configured to send a signal, and the second communication apparatus may be configured to receive the signal. In an example, in an uplink communication process, the first communication apparatus may be a terminal device, or may be a component such as a module or a chip in the terminal device, and the second communication apparatus may be a network device, or may be a component such as a module or a chip in the network device. The network device is, for example, a RAN or another access network device. In another example, in a downlink communication process, the first communication apparatus may be a network device, or may be a component such as a module or a chip in the network device, and the second communication apparatus may be a terminal device, or may be a component such as a module or a chip in the terminal device. Similarly, it may also be considered that the first communication apparatus may serve as a signal receiver, and the second communication apparatus may serve as a signal transmitter.

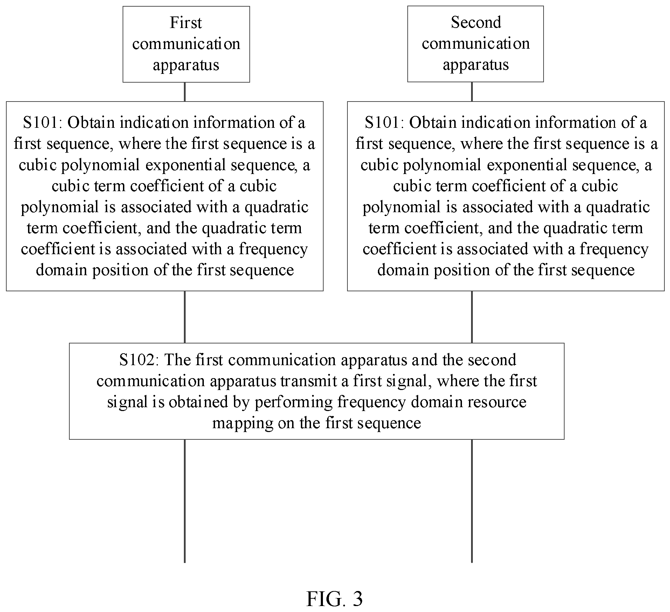

The following describes the method with reference to a procedure shown in FIG. 3.

S101: The first communication apparatus and the second communication apparatus separately obtain indication information of a first sequence.

In this application, the first sequence is a cubic polynomial exponential sequence, and an expression of the first sequence satisfies: ${s}_{a , b , c , d} \left(n\right) = {e}^{- j 2 π \left({an}^{3}+{bn}^{2}+cn+d\right)} , n = 0 , 1 , … , N - 1 .$

*N* represents a sequence length of the first sequence, *a* in a cubic polynomial represents a cubic term coefficient, *b* represents a quadratic term coefficient, *c* represents a linear term coefficient, and d represents a constant term.

Optionally, if the constant term d in the cubic polynomial is 0, the expression of the first sequence may further satisfy: ${s}_{a , b , c} \left(n\right) = {e}^{- j 2 π \left({an}^{3}+{bn}^{2}+cn\right)} , n = 0 , 1 , … , N - 1 .$

*N* represents a sequence length of the first sequence, *a* in a cubic polynomial represents a cubic term coefficient, *b* represents a quadratic term coefficient, and c represents a linear term coefficient.

Optionally, if the sequence length of the first sequence is a prime number, the expression of the first sequence may further satisfy: ${s}_{a , b , c , d} \left(n\right) = {e}^{- j 2 π \left({an}^{3}+{bn}^{2}+cn+d\right) / N} , n = 0 , 1 , … , N - 1 .$

*N* represents the sequence length of the first sequence, and *a, b, c* each are an element in a finite field ${ℤ}_{N}$*.* In this case, a sequence capacity of the first sequence is positively correlated with a cube of the sequence length.

Optionally, if the sequence length of the first sequence is a prime number, and the constant term d in the cubic polynomial is 0, the expression of the first sequence may further satisfy: ${s}_{a , b , c} \left(n\right) = {e}^{- j 2 π \left({an}^{3}+{bn}^{2}+cn\right) / N} , n = 0 , 1 , … , N - 1 .$

*N* represents the sequence length of the first sequence, and *a, b, c* each are an element in a finite field ${ℤ}_{N}$*.* In this case, a sequence capacity of the first sequence is positively correlated with a cube of the sequence length.

In this application, the cubic term coefficient *a* is associated with the quadratic term coefficient *b*, that is, there is an association relationship between the cubic term coefficient *a* and the quadratic term coefficient *b*. Optionally, "associated with" may be replaced with or understood as "corresponding to".

In an example of association between the cubic term coefficient *a* and the quadratic term coefficient *b*, both the cubic term coefficient *a* and the quadratic term coefficient *b* are associated with *λ*. A value range of *λ* includes an integer greater than or equal to 1 and less than or equal to *P* - 1, and *P* is a maximum prime number that does not exceed the sequence length *N* of the first sequence.

Optionally, the cubic term coefficient *a* is related to *λ*, and the quadratic term coefficient *b* is related to a multiple (for example, an integer multiple) of *λ*. In other words, the quadratic term coefficient *b* is a multiple (for example, an integer multiple) of the cubic term coefficient a.

In addition, in this application, the quadratic term coefficient *b* is associated with a frequency domain position of the first sequence. The frequency domain position is a position of a frequency domain resource to which the first sequence is mapped. Optionally, frequency domain discontinuous mapping is used for the first sequence in this application. For example, the frequency domain position may correspond to a transmission comb (transmission comb, TC) index or a frequency division multiplexing index. That the frequency domain position corresponds to the transmission comb index may mean that the frequency domain position may be indicated by using the transmission comb index when frequency domain comb mapping is used. Optionally, in this case, the quadratic term coefficient *b* may be associated with the transmission comb index. That the frequency domain position corresponds to the frequency division multiplexing index may mean that the frequency domain position may be indicated by using the frequency division multiplexing index when frequency division multiplexing mapping is used. Optionally, in this case, the quadratic term coefficient *b* may be associated with the frequency division multiplexing index.

The following describes expressions of the cubic term coefficient *a* and the quadratic term coefficient *b* with reference to Embodiment 1 and Embodiment 2, and details are not described herein.

In this application, the cubic polynomial exponential sequence may be determined based on a base sequence and an auxiliary sequence. For example, the cubic polynomial exponential sequence may be represented as a form *s_{a,b,c}*(*n*) = *uₐ*(*n*) · *v*_{*b*,*c*}(*n*) of point-by-point multiplication of the base sequence and the auxiliary sequence.

The base sequence *uₐ*(*n*) satisfies full-domain low ambiguity. For example, a maximum value of an auto-ambiguity function of the base sequence is $\sqrt{N}$, and a maximum value of a cross-ambiguity function of the base sequence does not exceed $2 \sqrt{N}$. The auxiliary sequence *v*_{*b*,c}(*n*) satisfies a large capacity of a low ambiguity zone. For example, a maximum value of a cross-ambiguity function of the auxiliary sequence in a range defined by a maximum delay spread and a maximum Doppler spread is $\sqrt{N}$, and a sequence quantity of the auxiliary sequence is positively correlated with a square of the sequence length.

In an example, the base sequence may satisfy: ${u}_{a} \left(n\right) = {e}^{- j 2 {πan}^{3} / N} .$

The auxiliary sequence may satisfy: ${v}_{b , c} \left(n\right) = {e}^{- j 2 π \left({bn}^{2}+cn\right) / N} .$

It may be understood that the first sequence satisfies an exponential sum theorem, and the exponential sum theorem may also be referred to as a Weil bound on exponential sum (Weil bound on exponential sum) theorem. Therefore, the first sequence may also be referred to as a Weil exponential sum sequence, which is referred to as a W sequence for short.

The exponential sum theorem means the following:

A coefficient of a highest-degree term in a polynomial *p*(*n*) = *p_{d}n^{d}* + *p*_{*d-*1}*n*^{*d*-1} *+* ··· + *p*₁*n* + *p*₀ of degree d is ${p}_{d} ∈ {ℤ}_{N}^{∗}$, where ${ℤ}_{N}^{∗}$ represents a finite field {1, ..., *N* - 1}; a coefficient of a non-highest-degree term is ${p}_{0} , {p}_{1} , … , {p}_{d - 1} ∈ {ℤ}_{N}$*,* where ${ℤ}_{N}$ represents a finite field {0,1, ..., *N* - 1} , *N* is a prime number, and d ≥ 1 ; and an exponential sum $\left|{\sum }_{n = 0}^{N - 1} {e}^{- j 2 πp \left(n\right) / N}\right|$ satisfies $\left|{\sum }_{n = 0}^{N - 1} {e}^{- j 2 πp \left(n\right) / N}\right| \leq \left(d-1\right) \sqrt{N}$, where |·| represents a modulus.

In particular, when d = 2, the exponential sum is degraded to a Gaussian sum $\left|{\sum }_{n = 0}^{N - 1} {e}^{- j 2 π \left({p}_{2}^{2}{n}^{2}+{p}_{1}n+{p}_{0}\right) / N}\right|$, that is, the Gaussian sum satisfies: $\left|{\sum }_{n = 0}^{N - 1} {e}^{- j 2 π \left({p}_{2}^{2}{n}^{2}+{p}_{1}n+{p}_{0}\right) / N}\right| = \sqrt{N}$ .

In this application, a cross-ambiguity function of first sequences ${s}_{{a}_{1} , {b}_{1} , {c}_{1}} \left(n\right) = {e}^{- j 2 π \left({a}_{1}{n}^{3}+{b}_{1}{n}^{2}+{c}_{1}n\right) / N}$ and ${s}_{{a}_{2} , {b}_{2} , {c}_{2}} \left(n\right) = {e}^{- j 2 π \left({a}_{2}{n}^{3}+{b}_{2}{n}^{2}+{c}_{2}n\right) / N}$ that are continuously mapped in time domain satisfies: $\begin{matrix}\left|{A}_{{s}_{{a}_{1} , {b}_{1} , {c}_{1}} , {s}_{{a}_{2} , {b}_{2} , {c}_{2}}}\left(τ, ν\right)\right| = {\sum }_{n = 0}^{N - 1} {s}_{{a}_{1} , {b}_{1} , {c}_{1}} \left(n\right) {s}_{{a}_{2} , {b}_{2} , {c}_{2}}^{∗} \left[\left(n-τ\right) mod N\right] {e}^{j 2 πnν / N} = \\ \left\{\begin{matrix}N & {a}_{1} = {a}_{2} , {b}_{1} = \left({b}_{2}-3{a}_{2}τ\right) mod N , {c}_{1} = \left({c}_{2}-2{b}_{2}+3{a}_{2}{τ}^{2}+ν\right) mod N \\ 0 & {a}_{1} = {a}_{2} , {b}_{1} = \left({b}_{2}-3{a}_{2}τ\right) mod N , {c}_{1} \neq \left({c}_{2}-2{b}_{2}τ+3{a}_{2}{τ}^{2}+ν\right) mod N \\ \sqrt{N} & {a}_{1} = {a}_{2} , {b}_{1} \neq \left({b}_{2}-3{a}_{2}τ\right) mod N \\ \leq 2 \sqrt{N} & {a}_{1} \neq {a}_{2}\end{matrix}.\right.\end{matrix}$

Therefore, as long as a cross-ambiguity function of two cubic polynomial exponential sequences does not have a peak *N* in an ambiguity zone, a maximum value of an ambiguity function of the cubic polynomial exponential sequence does not exceed $2 \sqrt{N}$. It should be noted that for any two different cubic polynomial exponential sum sequences, it cannot be ensured that a cross-ambiguity function does not have a peak N in an ambiguity zone. For example, for *s*_{1,2,3}(*n*) = *e*^{*-j*2π(*n*³*+*2*n*²*+*3*n)*/*N*} and *s*_{1*,*5,8}(*n*) = *e*^{*-j*2π(*n*³*+*5*n*²*+*8*n)*/*N*}, and an ambiguity zone Δ_{T} × Δ_{F} = 2 × 3, a cross-ambiguity function has a peak |*A*_{*s*_{1,2,3},*s*_{1,5,8}}(1,2)| = *N* at a position of 〈*τ,v*〉 = 〈1,2〉. To ensure low ambiguity between sequences, it is necessary to design cubic polynomial exponential sum sequences, to avoid a peak of a cross-ambiguity function in the ambiguity zone Δ_{T} × Δ_{F}, and improve a sequence capacity as much as possible. Δ_{T} represents the maximum delay spread, and Δ_{F} represents the maximum Doppler spread. For a case in which the sequence length of the first sequence is a composite number, the following further describes the expression of the first sequence with reference to Embodiment 1 and Embodiment 2. Details are not described herein.

S102: The first communication apparatus and the second communication apparatus transmit a first signal.

The first signal corresponds to the first sequence. For example, the first signal is a signal obtained by performing frequency domain resource mapping on the first sequence. A frequency domain mapping manner may be performing frequency domain resource mapping on the first sequence based on the transmission comb index or the frequency division multiplexing index. The following provides separate descriptions with reference to Embodiment 1 and Embodiment 2, and details are not described herein.

In this application, in uplink communication or downlink communication, the first signal may be transmitted between the first communication apparatus and the second communication apparatus through an air interface. For example, the first communication apparatus sends the first signal to the second communication apparatus.

For example, the first communication apparatus and the second communication apparatus each have an air interface transmission capability. For example, the first communication apparatus and the second communication apparatus each have a wireless transceiver such as an antenna. In this case, the first communication apparatus may send the first signal through the wireless transceiver. Correspondingly, the second communication apparatus may receive the first signal through the wireless transceiver, and perform processing such as demodulation on the first signal, to obtain information carried in the first signal.

Alternatively, the first communication apparatus and/or the second communication apparatus may be a device or an apparatus that does not have an air interface communication capability, such as a chip. The first communication apparatus and/or the second communication apparatus may perform communication through an external wireless transceiver such as an antenna. For example, when neither the first communication apparatus nor the second communication apparatus has an air interface communication capability, the first communication apparatus may output the first signal to an antenna through an interface between the first communication apparatus and the antenna, and the antenna may be configured to send the first signal through an air interface. Correspondingly, an antenna connected to the second communication apparatus may be configured to receive the first signal transmitted through the air interface, and transmit the signal to the second communication apparatus through an interface between the antenna and the second communication apparatus. Then, the second communication apparatus may perform processing such as demodulation on the received signal, to obtain information carried in the first signal.

Based on the procedure shown in FIG. 3, the first communication apparatus may determine the first sequence based on the indication information of the first sequence, and send the first signal corresponding to the first sequence. The first sequence may be a Weil exponential sum sequence, that is, a sequence that satisfies an exponential sum theorem, which has better auto-ambiguity and cross-ambiguity characteristics than a Gold sequence. If a non-orthogonal anti-frequency-offset DMRS sequence is constructed by using frequency domain mapping, interference between non-orthogonal DMRS ports can be reduced, and a DMRS sequence capacity can be improved, thereby improving transmission performance.

The following describes the indication information of the first sequence in this application.

In this application, the indication information of the first sequence may be used to determine the first sequence. For example, the indication information of the first sequence may include a parameter related to the first sequence. For example, the indication information indicates the quadratic term coefficient and/or the cubic term coefficient of the first sequence. For another example, the indication information may indicate an index of the first sequence in a sequence codebook. For another example, the indication information may include the first sequence, that is, the indication information includes a complete sequence of the first sequence. The following describes implementations of the indication information of the first sequence by using examples.

Optionally, in uplink transmission and/or downlink transmission, a network device may send the indication information of the first sequence to a terminal device, that is, the network device may indicate the first sequence to the terminal device. The indication information of the first sequence may be included in a radio resource control (radio resource control, RRC) message, a media access control (media access control, MAC) control element (control element, CE), or downlink control information (downlink control information, DCI) sent by the network device to the terminal device.

In this application, the first communication apparatus may be the terminal device, and the second communication apparatus may be the network device. Therefore, the second communication apparatus may send the indication information of the first sequence to the first communication apparatus. Alternatively, the first communication apparatus may be the network device, and the second communication apparatus may be the terminal device. Therefore, the first communication apparatus may send the indication information of the first sequence to the second communication apparatus.

In an example, in uplink transmission, the network device may send the indication information of the first sequence to the terminal device. In this case, the terminal device may serve as the first communication apparatus, the network device may serve as the second communication apparatus, and the indication information of the first sequence may be sent by the network device to the terminal device. Therefore, in uplink transmission, that the first communication apparatus obtains the indication information of the first sequence may mean: The first communication apparatus receives the indication information of the first sequence from the second communication apparatus. That the second communication apparatus obtains the indication information of the first sequence may mean: The second communication apparatus generates the indication information of the first sequence after allocating the first sequence to the first communication apparatus, or the network device reads the indication information of the generated first sequence.

In another example, in downlink transmission, the network device may still send the indication information of the first sequence to the terminal device. In this case, the network device may serve as the first communication apparatus, and the terminal device may serve as the second communication apparatus. Therefore, in downlink transmission, that the first communication apparatus obtains the indication information of the first sequence may mean: The first communication apparatus generates, after allocating the first sequence to the second communication apparatus, the indication information indicating the first sequence, or the network device reads the indication information of the generated first sequence. That the second communication apparatus obtains the indication information of the first sequence may mean: The second communication apparatus receives the indication information of the first sequence from the first communication apparatus.

In addition, in communication between terminal devices, the first communication apparatus and the second communication apparatus may be different terminal devices. In this case, the first communication apparatus may send the indication information of the first sequence to the second communication apparatus, or the second communication apparatus may send the indication information of the first sequence to the first communication apparatus. In addition, in communication between terminal devices, the first sequence may be configured by a network device. In this case, in an implementation of S101, the first communication apparatus and the second communication apparatus each may receive the indication information of the first sequence from the network device.

The following describes implementations of the indication information of the first sequence by using examples.
(1) In a possible implementation, the indication information of the first sequence may indicate a parameter related to the first sequence. The parameter related to the first sequence may be used to indicate the first sequence and/or to transmit the first signal corresponding to the first sequence, or the parameter related to the first sequence may be used to determine the first sequence and/or to transmit the first signal corresponding to the first sequence. For example, the parameter related to the first sequence may include one or more parameters in the expression of the first sequence, such as at least one of a frequency domain orthogonal cover code index, a delay domain cyclic shift index, a transmission comb index, a frequency division multiplexing index, a Doppler domain cyclic shift index, a cubic term coefficient index of the cubic polynomial, or a time domain orthogonal cover code index. Therefore, the first communication apparatus and/or the second communication apparatus may determine the first sequence and/or transmit the first signal based on the indication information of the first sequence. The frequency domain orthogonal cover code index may indicate a frequency domain orthogonal cover code. The time domain orthogonal cover code index may indicate a time domain orthogonal cover code.

Specifically, the indication information of the first sequence may indicate an antenna port. For example, the indication information includes an antenna port number. The antenna port number corresponds to the parameter related to the first sequence. Therefore, upon obtaining the antenna port number, the first communication apparatus and/or the second communication apparatus may query a correspondence between the antenna port number and the parameter related to the first sequence, to determine the parameter related to the first sequence and corresponding to the antenna port number.

Optionally, in this implementation, the network device may send a correspondence between an antenna port number and a parameter related to a sequence by using an RRC message. Therefore, the first communication apparatus and/or the second communication apparatus may learn the correspondence between the antenna port and the parameter related to a sequence, including the correspondence between the antenna port number corresponding to the first sequence and the parameter related to the first sequence. In addition, the network device may further send the indication information of the first sequence for transmission of the first signal, to indicate the port number corresponding to the first sequence. Therefore, the first communication apparatus and/or the second communication apparatus may perform query based on the antenna port number, to obtain the parameter related to the first sequence.

(2) In another possible implementation, the indication information of the first sequence may be an index of the first sequence in a sequence codebook. The sequence codebook may be indicated by the network device by using configuration information. Correspondingly, when the first sequence needs to be indicated, the network device may indicate the index of the first sequence in the sequence codebook by using the indication information of the first sequence.

For example, the network device may configure the sequence codebook for the terminal device by using an RRC message or a MAC CE, and send the indication information of the first sequence to the terminal device by using DCI. In this case, the indication information of the first sequence may be the index of the sequence, to indicate the sequence from the sequence codebook. For another example, the indication information of the first sequence may indicate a parameter related to the first sequence. For example, the parameter related to the first sequence includes at least one of a frequency domain orthogonal cover code index, a delay domain cyclic shift index, a transmission comb index, a frequency division multiplexing index, a Doppler domain cyclic shift index, a cubic term coefficient index of the cubic polynomial, or a time domain orthogonal cover code index. Correspondingly, the terminal device may learn the parameter of the first sequence based on the indication information of the first sequence, determine the first sequence based on the expression of the first sequence in this application and the corresponding parameter, and transmit the first signal.

(3) In another possible implementation, the indication information of the first sequence may include the first sequence. Correspondingly, the first communication apparatus and/or the second communication apparatus may obtain the first sequence based on the indication information of the first sequence.

The following describes the first sequence in this application with reference to Embodiment 1 and Embodiment 2. Embodiment 1 provides a method for constructing a DMRS sequence with respect to frequency domain comb mapping. When a cyclic shift quantity is 2, and a transmission comb quantity is 2, Embodiment 1 corresponds to an NR DMRS configuration type 1. Embodiment 2 provides a method for constructing a DMRS sequence with respect to frequency division multiplexing mapping. When a frequency domain orthogonal cover code length is 2, and a frequency division multiplexing quantity is 3, Embodiment 2 corresponds to an NR DMRS configuration type 2.

**Embodiment 1:** When frequency domain comb mapping is used, a cubic term coefficient of the first sequence is $\frac{λ}{P}$, and a quadratic term coefficient of the first sequence is $\frac{3 λ \left[\left(kM+m\right){Δ}_{F}-m\right]}{MP}$.

*P* may be a maximum prime number that does not exceed a sequence length *N*. If a resource block (including 12 subcarriers) is used as a granularity for resource allocation, the sequence length *N* of the first sequence is usually a composite number. In this application, the granularity for resource allocation is not limited to the resource block. In practical application, a larger or smaller resource allocation granularity may be used. *M* represents a transmission comb quantity, Δ_{F} represents a maximum Doppler spread, *λ* represents a cubic term coefficient index of a cubic polynomial of the first sequence, *k* represents a Doppler domain cyclic shift index, and m represents a transmission comb index.

Optionally, an expression of the first sequence *s_{λ,k,l,m}*(*n*) satisfies: ${s}_{λ , k , l , m} \left(n\right) = {e}^{- j 2 π \left\{\frac{λ}{P}{n}^{3}+\frac{3 λ \left[\left(kM+m\right){Δ}_{F}-m\right]}{MP}{n}^{2}+\frac{l {Δ}_{T}}{N}n\right\}} , n = 0 , 1 , … , N - 1 .$

*N* represents the sequence length of the first sequence, Δ_{T} represents a maximum delay spread, *n* represents a time domain resource index of the first sequence, and *l* represents a delay domain cyclic shift index. In this application, the time domain resource index of the first sequence is, for example, a symbol position of the first sequence or a time domain position at a granularity other than a symbol.

Optionally, a value range of *λ, k, l, m* may satisfy: $λ ∈ \left\{1,2,…,P-1\right\} , \left(k∈\left\{0,1,…,\left⌊P/{Δ}_{F}\right⌋-1\right\},m∈\left\{0,1,…,M-1\right\}\right) ∨ \left(\begin{matrix}k ∈ \\ \left\{\left⌊P/{Δ}_{F}\right⌋\right\} , m ∈ \left\{0,1,….,\left⌊MP/{Δ}_{F}\right⌋-M\left⌊P/{Δ}_{F}\right⌋-1\right\}\end{matrix}\right) , l ∈ \left\{0,1,…,\left⌊N/{Δ}_{T}\right⌋-1\right\} ,$ where ∨ represents logical OR. $\left⌊⋅\right⌋$ represents rounding down. In some applications, rounding down may also be replaced with a value obtaining manner such as rounding up or rounding off.

In Embodiment 1, the first communication apparatus may perform frequency domain resource mapping on the first sequence based on the transmission comb index m to obtain the first signal, that is, the first signal is obtained by performing frequency domain resource mapping on the first sequence based on the transmission comb index m.

For example, an expression of the first signal *s̅_{λ,k,l,m}*(*i*) may satisfy: ${\overline{s}}_{λ , k , l , m} \left(i\right) = {\sum }_{n = 0}^{N - 1} {s}_{λ , k , l , m} \left(n\right) δ \left(i-nM+m\right) , i = 1 - M , 2 - M , … , M \left(N-1\right) .$

*N* represents the sequence length of the first sequence, *M* represents the transmission comb quantity, n represents a time domain resource position of the first sequence, *λ* represents the cubic term coefficient index of the cubic polynomial, *k* represents the Doppler domain cyclic shift index, *l* represents the delay domain cyclic shift index, m represents the transmission comb index, *δ*(*i*) represents an impulse function, and *i* represents a frequency domain resource index. In this application, if a subcarrier is used as a granularity of a frequency domain resource, the frequency domain resource index may be a subcarrier number. In addition, the granularity of the frequency domain resource is not limited to the subcarrier in this application. For example, a larger or smaller frequency domain resource granularity may be used.

It can be learned that if the subcarrier is used as the granularity of the frequency domain resource, the first signal occupies a total of *M* · *N* subcarriers.

Optionally, if an ambiguity function of the first sequence is applicable to an exponential sum theorem, the maximum Doppler spread Δ_{F} and the transmission comb quantity M may satisfy: $3 \left({Δ}_{F}-1\right) / M ∈ ℤ ,$ where 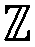 represents an integer.

Correspondingly, for a delay spread *τ* and a Doppler spread *v* that satisfy ∀τ ∈ [0, Δ_{T} - 1], ∀v ∈ [0, Δ_{F} - 1], the first signal may include two signals *s̅*_{*λ*₁*,k*₁*,l*₁,*m*₁}(*i*) and *s̅*_{*λ*₂*,k*₂*,l*₂,*m*₂}(*i*). In other words, the two signals *s̅*_{*λ*₁*,k*₁*,l*₁,*m*₁}(*i*) and *s̅*_{*λ*₂*,k*₂*,l*₂,*m*₂}(*i*) each may be used as the first signal. A cross-ambiguity function ${A}_{{\overline{s}}_{{λ}_{1} , {k}_{1} , {l}_{1} , {m}_{1}} , {\overline{s}}_{{λ}_{2} , {k}_{2} , {l}_{2} , {m}_{2}}} \left(τ, ν\right)$ of *s̅*_{*λ*₁*,k*₁*,l*₁,*m*₁}(*i*) and *s̅*_{*λ*₂*,k*₂*,l*₂,*m*₂}(*i*) satisfies:

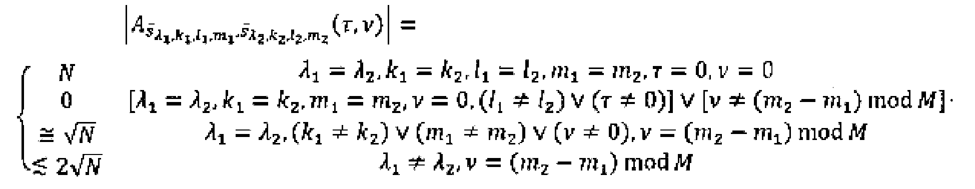

It can be learned that, if the ambiguity function of the first sequence is applicable to the exponential sum theorem, when a DMRS port is constructed based on the first sequence, a sequence capacity of the DMRS port is $\left⌊N/{Δ}_{T}\right⌋ ⋅ \left⌊M⋅P/{Δ}_{F}\right⌋ ⋅ \left(P-1\right)$. $\left⌊N/{Δ}_{T}\right⌋$ is an orthogonal sequence capacity provided by the delay domain cyclic shift index, M is an orthogonal sequence capacity provided by the transmission comb index, $\left⌊P/{Δ}_{F}\right⌋$ is a non-orthogonal sequence capacity provided by the quadratic term coefficient index, the quadratic term coefficient index may also be the Doppler domain cyclic shift index, and *P* - 1 is a non-orthogonal sequence capacity provided by the cubic term coefficient index.

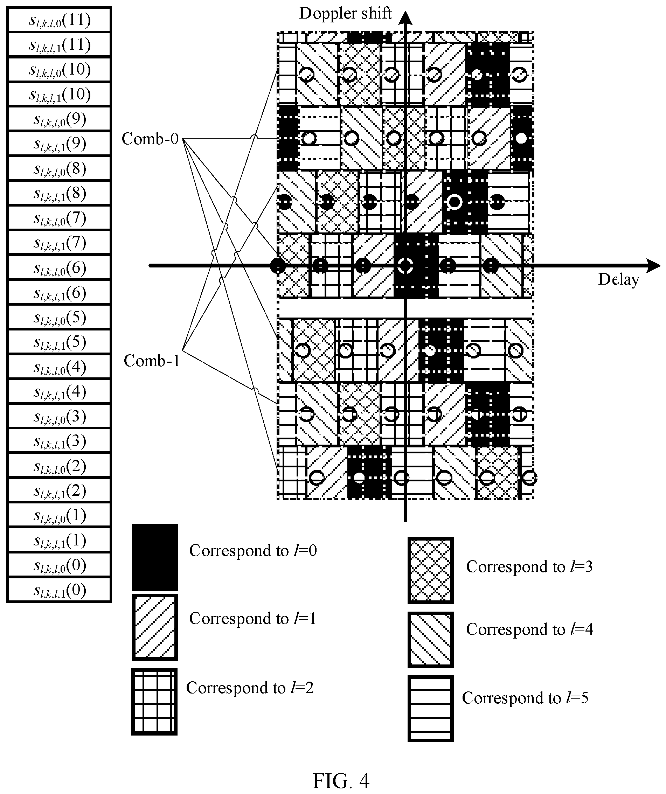

FIG. 4 is a diagram of multiplexing a low ambiguity zone of a first sequence when *N =* 12*, P* = 11, *M =* 2, Δ_{T} *=* 2, Δ_{F} = 3. In the figure, a rectangle represents an ambiguity zone, and a circle represents peak coordinates. Any ambiguity zone and/or peak coordinates correspond to one sequence. In FIG. 4, ambiguity zones in different rows correspond to different *k*. For example, a row in which an origin is located corresponds to *k* = 0.

For example, a size of the ambiguity zone may be set to Δ_{T} × Δ_{F} = 2 × 3.

Peak coordinates of an ambiguity function are represented as: $\left\{\begin{matrix}τ = \left\{3λN{\left[\left(kM+m\right){Δ}_{F}-m\right]}^{2}/{M}^{2}P-l{Δ}_{T}\right\} mod N \\ ν = \left(kM+m\right) {Δ}_{F}\end{matrix}.\right.$

It can be learned from FIG. 4 that multiplexing of at least one of the delay domain cyclic shift index, the transmission comb index, and the Doppler domain cyclic shift index may support multiplexing of a maximum of 42 DMRS ports. Ambiguity zones corresponding to different DMRS ports are adjacent and do not overlap each other. It should be noted that, according to the expression of the first sequence, different transmission comb indexes may correspond to different quantities of DMRS ports. For example, in FIG. 4, a comb index 0 corresponds to 24 DMRS ports, and a comb index 1 corresponds to 18 DMRS ports.

Table 1 shows comparison between a Gold sequence used by a DMRS with an NR OFDM waveform, a ZC (Zadoff-Chu) sequence used by a DMRS with an NR DFT-s-OFDM waveform, and the first sequence shown in Embodiment 1 in terms of a multiplexing scheme, a sequence capacity, correlation, and ambiguity. It can be learned that the first sequence improves anti-frequency-offset performance of an orthogonal DMRS port, reduces interference between non-orthogonal DMRS ports, and significantly increases a DMRS sequence capacity.

**Table 1**

| Sequence | | Orthogonal DMRS | | Non-orthogonal DMRS | |
|---|---|---|---|---|---|
| | | Level 1 | Level 2 | Level 3 | Level 4 |
| Gold sequence | Multiplexing scheme | Cyclic shift | Transmission comb | Scrambling identifier | / |
| | Sequence capacity | $\left⌊N/{Δ}_{T}\right⌋$ | M | ≥*N* | / |
| | Correlation function | 0 | 0 | $\geq 2 \sqrt{N}$ | / |
| | Ambiguity function | $\geq 2 \sqrt{N}$ | $\geq 2 \sqrt{N}$ | $\geq 2 \sqrt{N}$ | / |
| ZC sequence | Multiplexing scheme | Cyclic shift | Transmission comb | Root sequence number | / |
| | Sequence capacity | $\left⌊N/{Δ}_{T}\right⌋$ | *M* | *P* - 1 | / |
| | Correlation function | 0 | 0 | $\sqrt{N}$ | / |
| | Ambiguity function | *N* | *N* | $\sqrt{N}$ | / |
| First sequence | Multiplexing scheme | Cyclic shift | Transmission comb | Quadratic term coefficient | Cubic term coefficient |
| | Sequence capacity | $\left⌊N/{Δ}_{T}\right⌋$ | *M* | $\left⌊P/{Δ}_{F}\right⌋$ | *P* - 1 |
| | Correlation function | 0 | 0 | $\sqrt{N}$ | $2 \sqrt{N}$ |
| | Ambiguity function | $\sqrt{N}$ | $\sqrt{N}$ | $\sqrt{N}$ | $2 \sqrt{N}$ |

In Table 1, the level 1 to the level 4 respectively represent different multiplexing lengths. A lower level indicates a lower multiplexing degree, that is, a smaller quantity of DMRS ports, that is, a smaller sequence capacity. A higher level indicates a higher multiplexing degree, that is, a larger quantity of DMRS ports, that is, a larger sequence capacity. It can be learned that the DMRS sequence capacity may be expanded when the first sequence is used.

For a DMRS mapping type of 2 time domain OFDM symbols, Table 2 shows a configuration table of antenna port parameters for frequency domain comb mapping of the first sequence when *N = 12, P* = 11, *M* = 2, Δ*_{T}* = 6, Δ*_{F} =* 3. The first communication apparatus and/or the second communication apparatus may query Table 2 based on an antenna port number to determine a parameter related to the first sequence, and determine the first sequence based on the expression of the first sequence and the corresponding parameter, and/or determine the first sequence based on the expression of the first signal. The transmission comb index is referred to as a code division multiplexing group (code division multiplexing group, CDM group). It may be understood that antenna port numbers shown by 14-27 in Table 2 and parameters corresponding to the antenna port numbers indicate that for the antenna port numbers 14-27, a value of a cubic term coefficient index is *λ* = 1, a value of a time domain orthogonal cover code is (+ +), and parameters *l* = {0,1}, m = {0,1}, *k* = {0,1,2,3} are sequentially traversed. Antenna port numbers 28-41 and the like may be implemented by reference.

**Table 2**

| Antenna port number | Delay domain cyclic shift index *l* | Frequency division multiplex ing index *m* | Doppler domain cyclic shift index *k* | Cubic term coefficient index *λ* of a cubic polynomial | Time domain orthogonal cover code | Antenna port number | Delay domain cyclic shift index *l* | Frequency division multiplexing index *m* | Doppler domain cyclic shift index *k* | Cubic term coefficient index *λ* of a cubic polynomial | Time domain orthogonal cover code |
|---|---|---|---|---|---|---|---|---|---|---|---|
| 0 | 0 | 0 | 0 | 0 | 〈+ +〉 | 140 | 0 | 0 | 0 | 0 | 〈+ -〉 |
| 1 | 1 | 0 | 0 | 0 | 〈+ +〉 | 141 | 1 | 0 | 0 | 0 | 〈+ -〉 |
| 2 | 0 | 1 | 0 | 0 | 〈+ +〉 | 142 | 0 | 1 | 0 | 0 | 〈+ -〉 |
| 3 | 1 | 1 | 0 | 0 | 〈+ +〉 | 143 | 1 | 1 | 0 | 0 | 〈+ -〉 |
| 4 | 0 | 0 | 1 | 0 | 〈+ +〉 | 144 | 0 | 0 | 1 | 0 | 〈+ -〉 |
| 5 | 1 | 0 | 1 | 0 | 〈+ +〉 | 145 | 1 | 0 | 1 | 0 | 〈+ -〉 |
| 6 | 0 | 1 | 1 | 0 | 〈+ +〉 | 146 | 0 | 1 | 1 | 0 | 〈+ -〉 |
| 7 | 1 | 1 | 1 | 0 | 〈+ +〉 | 147 | 1 | 1 | 1 | 0 | 〈+ -〉 |
| 8 | 0 | 0 | 2 | 0 | 〈+ +〉 | 148 | 0 | 0 | 2 | 0 | 〈+ -〉 |
| 9 | 1 | 0 | 2 | 0 | 〈+ +〉 | 149 | 1 | 0 | 2 | 0 | 〈+ -〉 |

| Antenna port number | Delay domain cyclic shift index *l* | Frequency division multiplexing index *m* | Doppler domain cyclic shift index *k* | Cubic term coefficient index *λ* of a cubic polynomial | Time domain orthogonal cover code | Antenna port number | Delay domain cyclic shift index *l* | Frequency division multiplexing index *m* | Doppler domain cyclic shift index *k* | Cubic term coefficient index *λ* of a cubic polynomial | Time domain orthogonal cover code |
|---|---|---|---|---|---|---|---|---|---|---|---|
| 10 | 0 | 1 | 2 | 0 | 〈+ +〉 | 150 | 0 | 1 | 2 | 0 | 〈+ -〉 |
| 11 | 1 | 1 | 2 | 0 | 〈+ +〉 | 151 | 1 | 1 | 2 | 0 | 〈+ -〉 |
| 12 | 0 | 0 | 3 | 0 | 〈+ +〉 | 152 | 0 | 0 | 3 | 0 | 〈+ -〉 |
| 13 | 1 | 0 | 3 | 0 | 〈+ +〉 | 153 | 1 | 0 | 3 | 0 | 〈+ -〉 |
| 14-27 | 0-1 | 0-1 | 0-3 | 1 | 〈+ +〉 | 154-167 | 0-1 | 0-1 | 0-3 | 1 | 〈+ -〉 |
| 28-41 | 0-1 | 0-1 | 0-3 | 2 | 〈+ +〉 | 168-181 | 0-1 | 0-1 | 0-3 | 2 | 〈+ -〉 |
| 42-55 | 0-1 | 0-1 | 0-3 | 3 | 〈+ +〉 | 182-195 | 0-1 | 0-1 | 0-3 | 3 | 〈+ -〉 |
| 56-69 | 0-1 | 0-1 | 0-3 | 4 | 〈+ +〉 | 196-209 | 0-1 | 0-1 | 0-3 | 4 | 〈+ -〉 |
| 70-83 | 0-1 | 0-1 | 0-3 | 5 | 〈+ +〉 | 210-213 | 0-1 | 0-1 | 0-3 | 5 | (+ -〉 |
| 84-97 | 0-1 | 0-1 | 0-3 | 6 | 〈+ +〉 | 224-237 | 0-1 | 0-1 | 0-3 | 6 | 〈+ -〉 |
| 98-111 | 0-1 | 0-1 | 0-3 | 7 | 〈+ +〉 | 238-251 | 0-1 | 0-1 | 0-3 | 7 | 〈+ -〉 |
| 112-125 | 0-1 | 0-1 | 0-3 | 8 | 〈+ +〉 | 252-265 | 0-1 | 0-1 | 0-3 | 8 | (+ -〉 |
| 126-139 | 0-1 | 0-1 | 0-3 | 9 | 〈+ +〉 | 266-279 | 0-1 | 0-1 | 0-3 | 9 | 〈+ -〉 |

Table 2 is merely an example. A correspondence between the antenna port, the delay domain cyclic shift index *l,* the frequency division multiplexing index *m*, the Doppler domain cyclic shift index *k*, the cubic term coefficient index *λ* of the cubic polynomial, and the time domain orthogonal cover code in this application is not limited thereto.

Optionally, in Embodiment 1, the first communication apparatus and the second communication apparatus may obtain a first indication, and the first indication corresponds to the transmission comb index. Alternatively, the first indication corresponds to sequence mapping based on the transmission comb index. For example, the first indication may be indication information of the NR DMRS configuration type 1.

In uplink transmission and/or downlink transmission, the network device may send the first indication to the terminal device, that is, the network device may indicate a sequence mapping manner or an NR DMRS configuration type to the terminal device. The first indication may be included in an RRC message, a MAC CE, or DCI sent by the network device to the terminal device.

**Embodiment 2:** When frequency domain comb mapping is used, a cubic term coefficient of the first sequence is $\frac{λ}{P}$, and a quadratic term coefficient of the first sequence is $\frac{3 λ \left[\left(kMQ+mQ+q\right){Δ}_{F}-\left(mQ+q\right)\right]}{MQP}$.

*P* is a maximum prime number that does not exceed a sequence length of the first sequence, *M* represents a frequency division multiplexing quantity, *Q* represents a frequency domain orthogonal cover code length, Δ_{F} represents a maximum Doppler spread, *q* represents a symbol position of a frequency domain orthogonal cover code, a value range of *q* includes an integer greater than or equal to 0 and less than or equal to *Q* - 1, *λ* represents a cubic term coefficient index of the cubic polynomial, *k* represents a Doppler domain cyclic shift index, and *m* represents a frequency division multiplexing index.

Optionally, an expression of the first sequence *s̅*_{*λ,k,l*,*r,m*}(*n, q*) satisfies: $\begin{matrix}{s}_{λ , k , l , r , m} \left(n, q\right) = {e}^{- j 2 π \left\{\frac{λ}{P}{n}^{3}+\frac{3 λ \left[\left(kMQ+mQ+q\right){Δ}_{F}-\left(mQ+q\right)\right]}{MQP}{n}^{2}+\frac{l {Δ}_{T}}{N}n+\frac{rq}{Q}\right\}} , n = 0 , 1 , … , N - 1 , q = \\ 0 , 1 , … , Q - 1 .\end{matrix}$

*N* represents the sequence length of the first sequence, Δ_{T} represents a maximum delay spread, n represents a time domain position (for example, a symbol position) of the first sequence, *l* represents a delay domain cyclic shift index, and r represents a frequency domain orthogonal cover code index.

In Embodiment 2, a value range of *λ, k, l, m, r* may satisfy: $λ ∈ \left\{1,2,…,P-1\right\} , \left(k∈\left\{0,1,…,\left⌊P/{Δ}_{F}\right⌋-1\right\},m∈\left\{0,1,…,M-1\right\}\right)$ $∨ \left(k∈\left\{\left⌊P/{Δ}_{F}\right⌋\right\},m∈\left\{0,1,…,\left⌊MP/{Δ}_{F}\right⌋-M\left⌊P/{Δ}_{F}\right⌋-1\right\}\right) ,$ $l ∈ \left\{0,1,…,\left⌊N/{Δ}_{T}\right⌋-1\right\} , r ∈ \left\{1,2,…,Q-1\right\} .$

∨ represents logical OR.

In Embodiment 2, the first communication apparatus may perform frequency domain resource mapping on the first sequence based on the frequency division multiplexing index m and the symbol position *q* of the frequency domain orthogonal cover code to obtain the first signal, that is, the first signal is obtained by performing frequency domain resource mapping on the first sequence based on the frequency division multiplexing index m and the symbol position *q* of the frequency domain orthogonal cover code.

For example, an expression of the first signal *s̅*_{*λ,k,l*,*r,m*}(*i*) may satisfy: $\begin{matrix}{\overline{s}}_{λ , k , l , r , m} \left(i\right) = {\sum }_{q = 0}^{Q - 1} {\sum }_{n = 0}^{N - 1} {s}_{λ , k , l , r , m} \left(n, q\right) δ \left(i-nMQ+mQ+q\right) , i = 1 - MQ , 2 - \\ MQ , … , MQ \left(N-1\right) .\end{matrix}$

*N* represents the sequence length of the first sequence, *M* represents the frequency division multiplexing quantity, *Q* represents the frequency domain orthogonal cover code length, *s*_{*λ,k,l*,*r,m*}(*n, q)* represents the first sequence, *n* represents the symbol position of the first sequence, *q* represents the symbol position of the frequency domain orthogonal cover code, *λ* represents the cubic term coefficient index of the cubic polynomial, *k* represents the Doppler domain cyclic shift index, *l* represents the delay domain cyclic shift index, *m* represents the frequency division multiplexing index, *δ*(*i*) represents an impulse function, and *i* represents a frequency domain resource index.

It can be learned that if the subcarrier is used as the granularity of the frequency domain resource, the first signal occupies a total of *M* · *N* · Q subcarriers.

Optionally, if an ambiguity function of the first sequence is applicable to an exponential sum theorem, the maximum Doppler spread Δ_{F} and the transmission comb quantity *M* may satisfy: $3 \left({Δ}_{F}-1\right) / MQ ∈ ℤ ,$ where 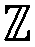 represents an integer.

Correspondingly, for a delay spread τ and a Doppler spread *v* that satisfy ∀τ ∈ [0, Δ_{T} - 1], ∀*v* ∈ [0, Δ_{F} - 1], the first signal may include two signals *s̅*_{*λ*₁*,k*₁*,l*₁,*r*₁,*m*₁}(*i*) and *s̅*_{*λ*₂*,k*₂*,l*₂,*r*₂,*m*₂}(*i*)*.* In other words, the two signals *s̅*_{*λ*₁*,k*₁*,l*₁,*r*₁,*m*₁}(*i*) and *s̅*_{*λ*₂*,k*₂*,l*₂,*r*₂,*m*₂}(*i*) each may be used as the first signal. A cross-ambiguity function ${A}_{{\overline{s}}_{{λ}_{1} , {k}_{1} , {l}_{1} , {r}_{1} , {m}_{1}} , {\overline{s}}_{{λ}_{2} , {k}_{2} , {l}_{2} , {r}_{2} , {m}_{2}}} \left(τ, ν\right)$ of *s̅*_{*λ*₁*,k*₁*,l*₁,*r*₁,*m*₁}(*i*) and *s̅*_{*λ*₂*,k*₂*,l*₂,*r*₂,*m*₂}(*i*) satisfies:

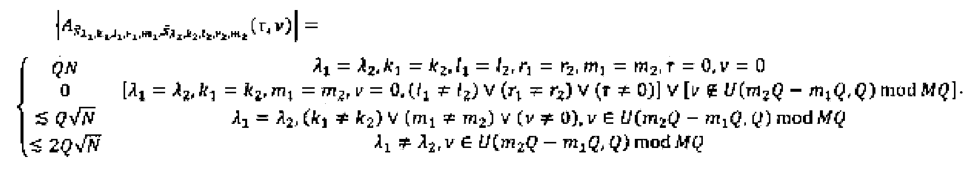

*U*(*m*₂*Q* - *m*₁*Q, Q)* represents an open interval (*m*₂*Q - m*₁*Q - Q, m*₂*Q - m*₁*Q + Q).*

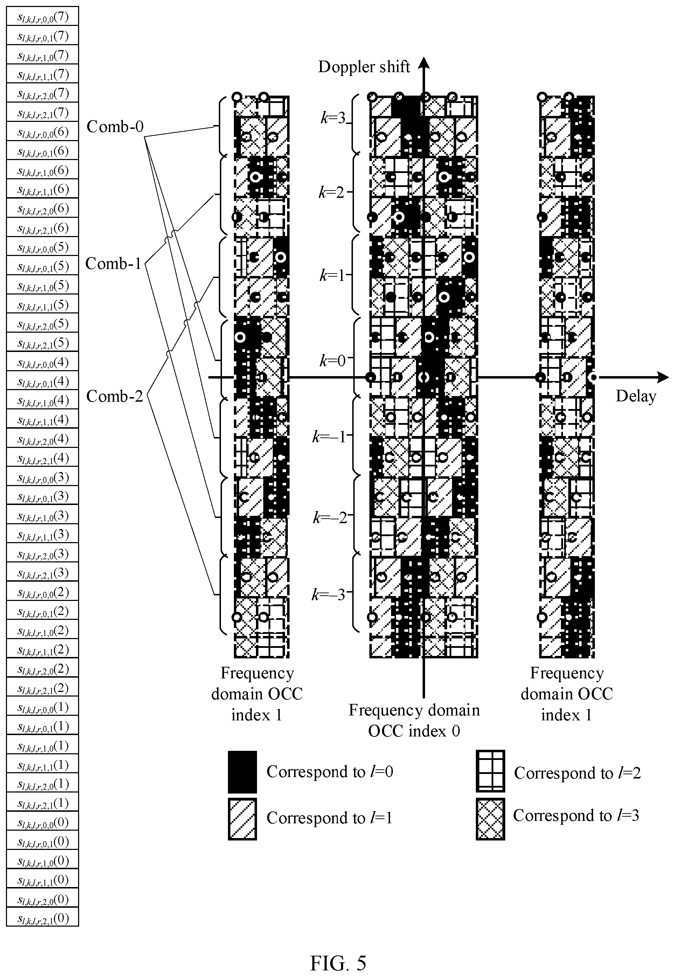

It can be learned that if the ambiguity function of the first sequence is applicable to the exponential sum theorem, when a DMRS port is constructed based on the first sequence, a sequence capacity of the DMRS port is $Q ⋅ \left⌊N/{Δ}_{T}\right⌋ ⋅ \left⌊M⋅P/{Δ}_{F}\right⌋ ⋅ \left(P-1\right)$, where Q is an orthogonal sequence capacity provided by the frequency domain orthogonal cover code, $\left⌊N/{Δ}_{T}\right⌋$
is an orthogonal sequence capacity provided by a cyclic shift, M is an orthogonal sequence capacity provided by frequency division multiplexing, $\left⌊P/{Δ}_{F}\right⌋$ is a non-orthogonal sequence capacity provided by the quadratic term coefficient, and *P* - 1 is a non-orthogonal sequence capacity provided by the cubic term coefficient. FIG. 5 is a diagram of multiplexing a low ambiguity zone of a W sequence when *N =* 8, *P = 7, M = 3, Q* = 2, Δ_{T} = 2, Δ_{F} = 3, where peak coordinates of an ambiguity function are represented as: $\left\{\begin{matrix}τ = \left\{3λN{\left[\left(kMQ+mQ+q\right){Δ}_{F}-\left(mQ+q\right)\right]}^{2}/{M}^{2}{Q}^{2}P-l{Δ}_{T}\right\} mod N \\ ν = \left(kMQ+mQ+q\right) {Δ}_{F}\end{matrix}\right. .$

It can be learned from FIG. 5 that, based on multiplexing of at least one of the frequency domain orthogonal cover code, the delay domain cyclic shift index, the frequency division multiplexing index, and the Doppler domain cyclic shift index, the first sequence may support multiplexing of a maximum of 48 DMRS ports. Ambiguity zones corresponding to different DMRS ports do not overlap each other. Similar to Embodiment 1, according to the expression of the first sequence, different frequency division multiplexing indexes may correspond to different quantities of DMRS ports. For example, in FIG. 5, a frequency division multiplexing index 0 corresponds to 24 DMRS ports, a frequency division multiplexing index 1 corresponds to 16 DMRS ports, and a frequency division multiplexing index 2 corresponds to 16 DMRS ports.

In FIG. 5, a rectangle represents an ambiguity zone, and a circle represents peak coordinates. Any ambiguity zone and/or peak coordinates correspond to one sequence. For example, a size of the ambiguity zone may be set to Δ_{T} × Δ_{F} = 2 × 3.

Table 3 shows comparison between a Gold sequence used by a DMRS with an NR OFDM waveform, a ZC sequence used by a DMRS with an NR DFT-s-OFDM waveform, and the first sequence shown in Embodiment 2 in terms of a multiplexing scheme, a sequence capacity, correlation, and ambiguity. It can be learned that the first sequence improves anti-frequency-offset performance of an orthogonal DMRS port, reduces interference between non-orthogonal DMRS ports, and significantly increases a DMRS sequence capacity.

**Table 3**

| Sequence | | Orthogonal DMRS | | | Non-orthogonal DMRS | |
|---|---|---|---|---|---|---|
| | | Level 1 | Level 2 | Level 3 | Level 4 | Level 5 |
| Gold sequence | Multiplexing scheme | Frequency domain orthogonal | Cyclic shift | Frequency division multiplexing | Scrambling | / |
| | | cover code | | | | |
| | Sequence capacity | *Q* | $\left⌊N/{Δ}_{T}\right⌋$ | *M* | ≥ *QN* | / |
| | Correlation function | 0 | 0 | 0 | $\geq 2 Q \sqrt{N}$ | / |
| | Ambiguity function | $\geq 2 Q \sqrt{N}$ | $\geq 2 Q \sqrt{N}$ | $\geq 2 Q \sqrt{N}$ | $\geq 2 Q \sqrt{N}$ | / |
| ZC sequence | Multiplexing scheme | Frequency domain orthogonal cover code | Cyclic shift | Frequency division multiplexing | Root sequence number | / |
| | Sequence capacity | *Q* | $\left⌊N/{Δ}_{T}\right⌋$ | *M* | *P* - 1 | / |
| | Correlation function | 0 | 0 | 0 | $Q \sqrt{N}$ | / |
| | Ambiguity function | *QN* | *QN* | *QN* | $Q \sqrt{N}$ | / |
| First sequence | Multiplexing scheme | Frequency domain orthogonal cover code | Cyclic shift | Frequency division multiplexing | Quadratic term coefficient | Cubic term coefficient |
| | Sequence capacity | *Q* | $\left⌊N/{Δ}_{T}\right⌋$ | *M* | $\left⌊P/{Δ}_{F}\right⌋$ | *P* - 1 |
| | Correlation function | 0 | 0 | 0 | $Q \sqrt{N}$ | $2 Q \sqrt{N}$ |
| | Ambiguity function | $Q \sqrt{N}$ | $Q \sqrt{N}$ | $Q \sqrt{N}$ | $Q \sqrt{N}$ | $2 Q \sqrt{N}$ |

In Table 3, the level 1 to the level 5 respectively represent different multiplexing lengths. A lower level indicates a lower multiplexing degree, that is, a smaller quantity of DMRS ports, that is, a smaller sequence capacity. A higher level indicates a higher multiplexing degree, that is, a larger quantity of DMRS ports, that is, a larger sequence capacity. It can be learned that the DMRS sequence capacity may be expanded when the first sequence is used.

For a DMRS mapping type of 2 time domain OFDM symbols, Table 4 shows a configuration table of antenna port parameters for frequency division multiplexing mapping of the first sequence when *N =* 8, *P* = 7, *M* = 3, Δ_{T} = 4, Δ_{F} = 3. The first communication apparatus and/or the second communication apparatus may query Table 4 based on an antenna port number to determine a parameter related to the first sequence, and determine the first sequence based on the expression of the first sequence and the corresponding parameter, and/or determine the first sequence based on the expression of the first signal. The frequency division multiplexing index is referred to as a code division multiplexing group. It may be understood that antenna port numbers shown by 28-55 in Table 4 and parameters corresponding to the antenna port numbers indicate that for the antenna port numbers 28-55, a value of a cubic term coefficient index is *λ* = 1, a time domain orthogonal cover code is 〈+ +〉, and parameters *q =* {〈+ +〉, 〈+ -〉}, *l* = {0,1}, m = {0,1,2}, *k* = {0,1,2} are sequentially traversed. Antenna port numbers 56-83 and the like may be implemented by reference.

**Table 4**

| Antenna port number | Frequency domain orthogonal cover code | Delay domain cyclic shift index *l* | Frequency division multiplexing index *m* | Doppler domain cyclic shift index *k* | Cubic term coefficient index *λ* of a cubic polynomial | Time domain orthogonal cover code | Antenna port number | Frequency domain orthogonal cover code | Delay domain cyclic shift index *l* | Frequency division multiplexing index *m* | Doppler domain cyclic shift index *k* | Cubic term coefficient index *λ* of a cubic polynomial | Time domain orthogonal cover code |
|---|---|---|---|---|---|---|---|---|---|---|---|---|---|
| 0 | 〈+ +〉 | 0 | 0 | 0 | 0 | 〈+ +〉 | 168 | 〈+ +〉 | 0 | 0 | 0 | 0 | (+-) |
| 1 | 〈+ -〉 | 0 | 0 | 0 | 0 | 〈+ +〉 | 169 | 〈+ -〉 | 0 | 0 | 0 | 0 | 〈+ -〉 |
| 2 | 〈+ +〉 | 1 | 0 | 0 | 0 | 〈+ +〉 | 170 | 〈+ +〉 | 1 | 0 | 0 | 0 | 〈+ -〉 |
| 3 | 〈+ -〉 | 1 | 0 | 0 | 0 | 〈+ +〉 | 171 | 〈+ -〉 | 1 | 0 | 0 | 0 | 〈+ -〉 |
| 4 | 〈+ +〉 | 0 | 1 | 0 | 0 | 〈+ +〉 | 172 | 〈+ +〉 | 0 | 1 | 0 | 0 | 〈+ -〉 |
| 5 | 〈+ -〉 | 0 | 1 | 0 | 0 | 〈+ +〉 | 173 | 〈+ -〉 | 0 | 1 | 0 | 0 | 〈+ -〉 |
| 6 | 〈+ +〉 | 1 | 1 | 0 | 0 | 〈+ +〉 | 174 | 〈+ +〉 | 1 | 1 | 0 | 0 | 〈+ -〉 |
| 7 | 〈+ -〉 | 1 | 1 | 0 | 0 | 〈+ +〉 | 175 | 〈+ -〉 | 1 | 1 | 0 | 0 | 〈+ -〉 |
| 8 | 〈+ +〉 | 0 | 2 | 0 | 0 | 〈+ +〉 | 176 | 〈+ +〉 | 0 | 2 | 0 | 0 | 〈+ -〉 |
| 9 | 〈+ -〉 | 0 | 2 | 0 | 0 | 〈+ +〉 | 177 | 〈+ -〉 | 0 | 2 | 0 | 0 | (+-) |
| 10 | 〈+ +〉 | 1 | 2 | 0 | 0 | 〈+ +〉 | 178 | 〈+ +〉 | 1 | 2 | 0 | 0 | (+-) |
| 11 | 〈+ -〉 | 1 | 2 | 0 | 0 | 〈+ +〉 | 179 | 〈+ -〉 | 1 | 2 | 0 | 0 | (+-) |
| 12 | 〈+ +〉 | 0 | 0 | 1 | 0 | 〈+ +〉 | 180 | 〈+ +〉 | 0 | 0 | 1 | 0 | (+-) |
| 13 | 〈+ -〉 | 0 | 0 | 1 | 0 | 〈+ +〉 | 181 | 〈+ -〉 | 0 | 0 | 1 | 0 | (+-) |
| 14 | 〈+ +〉 | 1 | 0 | 1 | 0 | 〈+ +〉 | 182 | 〈+ +〉 | 1 | 0 | 1 | 0 | (+-) |
| *15* | 〈+ -〉 | 1 | 0 | 1 | 0 | 〈+ +〉 | 183 | 〈+ -〉 | 1 | 0 | 1 | 0 | 〈+ -〉 |
| 16 | 〈+ +〉 | 0 | 1 | 1 | 0 | 〈+ +〉 | 184 | 〈+ +〉 | 0 | 1 | 1 | 0 | 〈+ -〉 |
| 17 | 〈+ -〉 | 0 | 1 | 1 | 0 | 〈+ +〉 | 185 | 〈+ -〉 | 0 | 1 | 1 | 0 | 〈+ -〉 |
| 18 | 〈+ +〉 | 1 | 1 | 1 | 0 | 〈+ +〉 | 186 | 〈+ +〉 | 1 | 1 | 1 | 0 | 〈+ -〉 |
| 19 | (+-) | 1 | 1 | 1 | 0 | 〈+ +〉 | 187 | 〈+ -〉 | 1 | 1 | 1 | 0 | 〈+ -〉 |
| 20 | 〈+ +〉 | 0 | 2 | 1 | 0 | 〈+ +〉 | 188 | 〈+ +〉 | 0 | 2 | 1 | 0 | 〈+ -〉 |
| 21 | 〈+ -〉 | 0 | 2 | 1 | 0 | 〈+ +〉 | 189 | 〈+ -〉 | 0 | 2 | 1 | 0 | 〈+ -〉 |
| 22 | 〈+ +〉 | 1 | 2 | 1 | 0 | 〈+ +〉 | 190 | 〈+ +〉 | 1 | 2 | 1 | 0 | 〈+ -〉 |
| 23 | 〈+ -〉 | 1 | 2 | 1 | 0 | 〈+ +〉 | 191 | 〈+ -〉 | 1 | 2 | 1 | 0 | 〈+ -〉 |
| 24 | 〈+ +〉 | 0 | 0 | 2 | 0 | 〈+ +〉 | 192 | 〈+ +〉 | 0 | 0 | 2 | 0 | 〈+ -〉 |
| 25 | 〈+ -〉 | 0 | 0 | 2 | 0 | 〈+ +〉 | 193 | 〈+ -〉 | 0 | 0 | 2 | 0 | 〈+ -〉 |
| 26 | 〈+ +〉 | 1 | 0 | 2 | 0 | 〈+ +〉 | 194 | 〈+ +〉 | 1 | 0 | 2 | 0 | 〈+ -〉 |
| 27 | 〈+ -〉 | 1 | 0 | 2 | 0 | 〈+ +〉 | 195 | 〈+ -〉 | 1 | 0 | 2 | 0 | 〈+ -〉 |
| 28-55 | 〈+ ±〉 | 0-1 | 0-2 | 0-2 | 1 | 〈+ +〉 | 196-223 | 〈+ ±〉 | 0-1 | 0-2 | 0-2 | 1 | 〈+ -〉 |
| 56-83 | 〈+ +〉 | 0-1 | 0-2 | 0-2 | 2 | 〈+ +〉 | 224-251 | 〈+ ±〉 | 0-1 | 0-2 | 0-2 | 2 | 〈+ -〉 |

| Anten Antenna port number | Frequency domain orthogonal cover code | Delay domain cyclic shift index *l* | Frequency division multiplexing index *m* | Doppler domain cyclic shift index *k* | Cubic term coefficient index *λ* of a cubic polynomial | Time domain orthogonal cover code | Antenna port number | Frequency domain orthogonal cover code | Delay domain cyclic shift index *l* | Frequency division multiplexing index *m* | Doppler domain cyclic shift index *k* | Cubic term coefficient index *λ* of a cubic polynomial | Time domain orthogonal cover code |
|---|---|---|---|---|---|---|---|---|---|---|---|---|---|
| 84-111 | 〈+ ±〉 | 0-1 | 0-2 | 0-2 | 3 | 〈+ +〉 | 252-279 | 〈+ ±〉 | 0-1 | 0-2 | 0-2 | 3 | 〈+ -〉 |
| 112-139 | 〈+ ±〉 | 0-1 | 0-2 | 0-2 | 4 | 〈+ +〉 | 280-307 | 〈+ ±〉 | 0-1 | 0-2 | 0-2 | 4 | 〈+ -〉 |
| 140-167 | 〈+ ±〉 | 0-1 | 0-2 | 0-2 | 5 | 〈+ +〉 | 308-335 | 〈+ ±〉 | 0-1 | 0-2 | 0-2 | 5 | 〈+ -〉 |

Table 4 is merely an example. A correspondence between the antenna port, the frequency domain orthogonal cover code, the delay domain cyclic shift index *l*, the frequency division multiplexing index *m*, the Doppler domain cyclic shift index *k,* the cubic term coefficient index *λ* of the cubic polynomial, and the time domain orthogonal cover code in this application is not limited thereto.

In embodiments of this application, for a plurality of layers of a same terminal device, a plurality of terminal devices in a same cell, or a plurality of users in different cells during multi-cell multi-user multi-layer (layer) transmission, different sequences may be used for transmission. Two sequences (for example, a first sequence and a second sequence) are used as an example. The first sequence and the second sequence are different in terms of at least one of a frequency domain orthogonal cover code index *r*, a delay domain cyclic shift index *l,* a transmission comb index m, a frequency division multiplexing index m, a time domain orthogonal cover code index, a Doppler domain cyclic shift index *k*, or a cubic term coefficient index *λ* corresponding to the first sequence and the second sequence. The second sequence and the first sequence may have a same expression, but at least one of the frequency domain orthogonal cover code index *r*, the delay domain cyclic shift index *l,* the transmission comb index *m*, the frequency division multiplexing index *m*, the Doppler domain cyclic shift index *k,* or the cubic term coefficient index *λ* in the expression may have different values. The first sequence and the second sequence may be alternatively used as two first sequences: *s*_{*λ*₁*,k*₁*,l*₁,*r*₁,*m*₂}(*n, q*) and *s*_{*λ*₂*,k*₂*,l*₂,*r*₂,*m*₂}(*n, q*)

When frequency domain comb mapping is used, that is, in Embodiment 1, based on Table 2, for multi-cell multi-user multi-layer transmission, a plurality of layers of a same terminal device may be multiplexed by using the delay domain cyclic shift index *l*, the time domain orthogonal cover code index, and the transmission comb index *m*, that is, different layers may be multiplexed by using at least one of different delay domain cyclic shift indexes *l*, time domain orthogonal cover code indexes, and transmission comb indexes *m*. A plurality of terminal devices in a same cell may be multiplexed by using the Doppler domain cyclic shift index *k*, that is, different terminal devices may use different Doppler domain cyclic shift indexes *k*. A plurality of terminal devices in different cells may be multiplexed by using the cubic term coefficient index *λ*, that is, different users may use different cubic term coefficient indexes *λ*.

For example, for a terminal device that uses 4-layer transmission, a network device may allocate antenna port numbers 0, 1, 140, and 141 in Table 2 to the terminal device. The four antenna port numbers respectively correspond to four streams of the terminal device, and a layer 1 to a layer 4 of the terminal device can achieve orthogonality, thereby reducing inter-layer interference of the same terminal device.

When frequency division multiplexing mapping is used, that is, in Embodiment 2, based on Table 4, for multi-cell multi-user multi-layer transmission, a plurality of layers of a same terminal device may be multiplexed by using the frequency domain orthogonal cover code, the delay domain cyclic shift index *l*, the time domain orthogonal cover code index, and the frequency division multiplexing index *m*, that is, different layers may be multiplexed by using at least one of different frequency domain orthogonal cover codes, delay domain cyclic shift indexes *l*, time domain orthogonal cover code indexes, and frequency division multiplexing indexes *m*. A plurality of terminal devices in a same cell may be multiplexed by using the Doppler domain cyclic shift index *k*, that is, different terminal devices may use different Doppler domain cyclic shift indexes *k*. A plurality of terminal devices in different cells may be multiplexed by using the cubic term coefficient index *λ*, that is, different terminal devices may use different cubic term coefficient indexes *λ*.

In the foregoing example, indication information of the first sequence and indication information of the second sequence may be different indication information. The first sequence and the second sequence may be different sequences that belong to a same sequence set. For the sequence set, refer to the descriptions in this application. For the indication information of the second sequence, refer to the descriptions of the indication information of the first sequence. It may be considered that the indication information of the first sequence indicates a sequence, and the indication information of the second sequence indicates a sequence. In other words, different indication information indicates different sequences. In addition, when a sequence set includes a plurality of sequences, a case in which more indication information indicates more sequences is not limited in this application.

The first sequence and the second sequence may be allocated by a same network device. For example, the network device allocates the first sequence and the second sequence, and determines the indication information of the first sequence and the indication information of the second sequence. For example, the first sequence and the second sequence may be respectively applicable to different layers of a same terminal device, and one layer may correspond to one signal flow. For another example, the first sequence and the second sequence may be respectively applicable to different terminal devices. A terminal device to which the first sequence is applicable and a terminal device to which the second sequence is applicable may belong to a same cell or different cells.

For a case in which the first sequence and the second sequence are applicable to different layers of a same terminal device, refer to S101. The terminal device obtains the indication information of the first sequence and the indication information of the second sequence. The indication information of the first sequence and the indication information of the second sequence may respectively correspond to different layers. After obtaining the indication information of the first sequence and the indication information of the second sequence, the terminal device may determine the first sequence based on the indication information of the first sequence, and transmit a signal at a first layer based on the first sequence. In addition, the terminal device may further obtain the second sequence based on the indication information of the second sequence, and transmit a signal at a second layer based on the second sequence. The first layer and/or the second layer of the terminal device may include one or more layers. The first layer and the second layer of the terminal device include different layers.

Optionally, if the first sequence and the second sequence are applicable to different layers of a same terminal device, the first sequence and the second sequence may use at least one of different delay domain cyclic shift indexes *l*, time domain orthogonal cover code indexes, and transmission comb indexes *m* for multiplexing.

If the first sequence and the second sequence are applicable to different layers of a same terminal device, the indication information of the first sequence and the indication information of the second sequence may be carried in a same RRC message, a same MAC CE, or same DCI.

For a case in which the first sequence and the second sequence are applicable to different layers of different terminal devices, refer to S101. A plurality of terminal devices respectively obtain the indication information of the first sequence and the indication information of the second sequence. For example, a first terminal device and a second terminal device may respectively obtain the indication information of the first sequence and the indication information of the second sequence. After obtaining the indication information of the first sequence, the first terminal device may determine the first sequence based on the indication information of the first sequence, and transmit a signal based on the first sequence. After obtaining the indication information of the second sequence, the second terminal device may determine the second sequence based on the indication information of the second sequence, and transmit a signal based on the second sequence.

Optionally, if the first terminal device and the second terminal device belong to a same cell, different Doppler domain cyclic shift indexes *k* may be used for the first sequence and the second sequence. If the first terminal device and the second terminal device belong to different cells, different cubic term coefficient indexes *λ* may be used for the first sequence and the second sequence.

It may be understood that, when a plurality of terminal devices all support multi-layer transmission, the network device may separately allocate sequences to a plurality of layers of the plurality of terminal devices, and indicate the sequences to the terminal devices by using indication information of the corresponding sequences.

Optionally, the terminal device in this application may receive indication information of a sequence used by another terminal device in a same group. For example, when the first sequence (or the indication information of the first sequence) corresponds to a first terminal device, and a third sequence (or indication information of the third sequence) corresponds to a second terminal device, the first terminal device may further obtain the indication information of the third sequence corresponding to the second terminal device, where the first terminal and the second terminal belong to a same terminal device group. The first sequence and the third sequence may be different sequences in a same sequence set. In other words, descriptions of the first sequence in this application may be used for the third sequence. Alternatively, the first sequence and the third sequence may be sequences in different sequence sets. This is not specifically limited. Terminal devices in a same group may be a plurality of terminal devices of multi-user multiple-input multiple-output (multi-user multiple-input multiple-output, MU-MIMO). For example, a plurality of terminal devices in a MU-MIMO group each may obtain indication information of sequences configured by a base station for all terminals in the group, to estimate channel state information of an interfering link, thereby reducing transmission interference between the plurality of terminal devices.

It may be understood that the first sequence in this application may be used not only for DMRS transmission, but also for transmission of another reference signal including a sounding reference signal (sounding reference signal, SRS). For a transmission process of the another reference signal, refer to the DMRS transmission process shown in this application. Details are not described.

It should be noted that the expression of the first sequence provided in this application is not limited to the expression used as an example in this application. For example, when a polynomial coefficient in the expression of the first sequence described in this application is slightly changed, for example, an operation such as adding a constant and/or a coefficient is performed, an orthogonal DMRS port and a non-orthogonal DMRS port can also achieve a technical effect that is the same as or similar to that in this application. Therefore, the correspondingly changed expression also falls within the protection scope of this application.

It may be understood that, to implement functions in the foregoing embodiments, the communication apparatus provided in this application may include a corresponding hardware structure and/or software module for performing functions of the first communication apparatus and/or the second communication apparatus. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

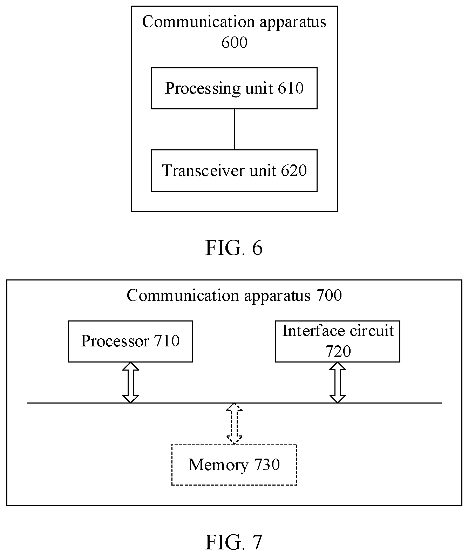

FIG. 6 and FIG. 7 are diagrams of structures of possible communication apparatuses according to an embodiment of this application. These communication apparatuses may be configured to implement functions of the first communication apparatus and/or the second communication apparatus in the foregoing method embodiments, and therefore can also achieve beneficial effects of the foregoing method embodiments. The first communication apparatus and/or the second communication apparatus each may serve as a terminal or a network device. In embodiments of this application, the communication apparatus may be the terminal or the network device shown in FIG. 1, or may be a module (for example, a chip) used in the terminal or the network device.

As shown in FIG. 6, a communication apparatus 600 includes a processing unit 610 and a transceiver unit 620. The communication apparatus 600 is configured to implement a function of the transmitter or the receiver in the method embodiment shown in FIG. 3.

When the communication apparatus 600 is configured to implement a function of the first communication apparatus or the second communication apparatus in the method embodiment shown in FIG. 3, the processing unit 610 or the transceiver unit 620 may be configured to obtain indication information of a first sequence. The transceiver unit 620 may be configured to transmit a first signal.

For more detailed descriptions of actions related to the processing unit 610 and the transceiver unit 620, refer to related descriptions in the method embodiment shown in FIG. 3.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to: store instructions executed by the processor 710, or store input data required for running instructions by the processor 710, or store data generated after the processor 710 runs instructions.

When the communication apparatus 700 is configured to implement the method shown in FIG. 3, the processor 710 is configured to implement a function of the processing unit 610, and the interface circuit 720 is configured to implement a function of the transceiver unit 620.

When the communication apparatus is a module or a chip used in a first communication apparatus or a second communication apparatus, the module or the chip implements a function of the first communication apparatus or the second communication apparatus in the foregoing method embodiments. The module or the chip receives information through another module (for example, a radio frequency module or an antenna), and the information may be transmitted to the module or the chip after being received by the another module through an air interface. Alternatively, the module or the chip sends information to another module (for example, a radio frequency module or an antenna), so that the another module sends the information through an air interface.

When the communication apparatus is a module or a chip used in an access network device (for example, a base station), the communication apparatus implements a function of the first communication apparatus or the second communication apparatus in the foregoing method embodiments. The module or the chip may be configured to receive information from another module (for example, a radio frequency module or an antenna), and the information is received by the another module through an air interface. Alternatively, the module or the chip sends information to another module (for example, a radio frequency module or an antenna), so that the another module sends the information through an air interface. The module or the chip herein may be a baseband chip, may be a CU, a DU, or another module, or may be an apparatus in an O-RAN architecture, for example, an apparatus like an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and can write information into the storage medium. The storage medium may alternatively be a part of the processor. The processor and the storage medium may be located in an ASIC. In addition, the ASIC may be located in a base station or an O-RAN. The processor and the storage medium may exist in the base station or the O-RAN as discrete components.

An embodiment of this application further provides a computer-readable storage medium. The computer-readable storage medium stores instructions, and the instructions may also be referred to as a computer program, computer program code, or the like. The instructions are run on a computer, so that the computer performs the method in FIG. 3 in the foregoing method embodiments and methods in embodiments of this application.

An embodiment of this application further provides a computer program product, including a computer program or instructions. When the computer program or the instructions are run on a computer, the methods in FIG. 3 and embodiments of this application are implemented.

An embodiment of this application further provides a chip. The chip includes a processor, the processor is coupled to a memory, and the processor is configured to execute a computer program or instructions stored in the memory, so that the methods in FIG. 3 and embodiments of this application are implemented. For example, an example in which the chip implements a function of an access network device is used. The chip may receive information from another module (for example, a radio frequency or an antenna) in the access network device, and the information may be sent by a terminal to the access network device. Alternatively, the chip may send information to another module (for example, a radio frequency or an antenna) in the access network device, and the information is sent by the access network device to a terminal.

An embodiment of this application further provides a communication system, including a first communication apparatus and a second communication apparatus. The first communication apparatus and the second communication apparatus may be respectively configured to implement functions of the first communication apparatus and the second communication apparatus in this application.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. A sequence indication method, comprising:
obtaining indication information of a first sequence, wherein the first sequence is a cubic polynomial exponential sequence, a cubic term coefficient of a cubic polynomial is associated with a quadratic term coefficient of the cubic polynomial, and the quadratic term coefficient of the cubic polynomial is associated with a frequency domain position of the first sequence; and
transmitting a first signal, wherein the first signal is obtained by performing frequency domain resource mapping on the first sequence.

2. The method according to claim 1, wherein that the cubic term coefficient of the cubic polynomial is associated with the quadratic term coefficient of the cubic polynomial comprises:
the cubic term coefficient of the cubic polynomial is related to *λ*, and the quadratic term coefficient of the cubic polynomial is related to a multiple of *λ*, wherein
a value range of *λ* comprises an integer greater than or equal to 1 and less than or equal to *P* - 1, and *P* is a maximum prime number that does not exceed a sequence length of the first sequence.

3. The method according to claim 1 or 2, wherein the quadratic term coefficient of the cubic polynomial is an integer multiple of *λ*.

4. The method according to any one of claims 1 to 3, wherein the first sequence comprises a base sequence and an auxiliary sequence, a cubic term of the cubic polynomial exponential sequence is determined based on the base sequence, and at least one of a quadratic term, a linear term, and a constant term of the cubic polynomial exponential sequence is determined based on the auxiliary sequence, wherein
a maximum value of an auto-ambiguity function of the base sequence is $\sqrt{N}$, a maximum value of a cross-ambiguity function of the base sequence does not exceed $2 \sqrt{N}$, and a sequence quantity of the base sequence is positively correlated with the sequence length; and
a maximum value of a cross-ambiguity function of the auxiliary sequence in a range defined by a maximum delay spread and a maximum Doppler spread is $\sqrt{N}$, and a sequence quantity of the auxiliary sequence is positively correlated with a square of the sequence length, wherein
*N* represents the sequence length of the first sequence.

5. The method according to any one of claims 1 to 4, wherein the frequency domain position corresponds to a transmission comb index.

6. The method according to claim 5, wherein the cubic term coefficient of the cubic polynomial is $\frac{λ}{P} ,$, and the quadratic term coefficient of the cubic polynomial is $\frac{3 λ \left[\left(kM+m\right){Δ}_{F}-m\right]}{MP}$, wherein
*P* is the maximum prime number that does not exceed the sequence length of the first sequence, *M* represents a transmission comb quantity, Δ_{F} represents the maximum Doppler spread, *λ* represents a cubic term coefficient index of the cubic polynomial, *k* represents a Doppler domain cyclic shift index, and m represents the transmission comb index.

7. The method according to claim 6, wherein the first sequence *s̅*_{*λ,k,l*,*m*}(*n*) satisfies: ${s}_{λ , k , l , m} \left(n\right) = {e}^{- j 2 π \left\{\frac{λ}{P}{n}^{3}+\frac{3 λ \left[\left(kM+m\right){Δ}_{F}-m\right]}{MP}{n}^{2}+\frac{l {Δ}_{T}}{N}n\right\}} , n = 0 , 1 , … , N - 1 ,$ wherein
*N* represents the sequence length of the first sequence, Δ_{T} represents the maximum delay spread, *n* represents a symbol position of the first sequence, and *l* represents a delay domain cyclic shift index.

8. The method according to claim 7, wherein *λ* ∈ {1,2, ..., *P* - 1}, $\left(k∈\left\{0,1,…,\left⌊P/{Δ}_{F}\right⌋-\right.\right.$ $\left.\left.1\right\},m∈\left\{0,1,…,M-1\right\}\right) ∨ \left(k∈\left\{\left⌊P/{Δ}_{F}\right⌋\right\},m∈\left\{0,1,…,\left⌊MP/{Δ}_{F}\right⌋-M\left⌊P/{Δ}_{F}\right⌋-1\right\}\right) , l ∈$ $\left\{0,1,…,\left⌊N/{Δ}_{T}\right⌋-1\right\}$, and V represents logical OR.

9. The method according to claim 7 or 8, wherein the maximum Doppler spread Δ_{F} and the transmission comb quantity *M* satisfy: $3 \left({Δ}_{F}-1\right) / M ∈ ℤ ,$ wherein 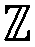 represents an integer.

10. The method according to any one of claims 5 to 9, wherein the first signal is obtained by performing frequency domain resource mapping on the first sequence based on the transmission comb index.

11. The method according to claim 10, wherein the first signal *s̅*_{*λ,k,l*,*m*}(*i*) satisfies: ${\overline{s}}_{λ , k , l , m} \left(i\right) = {\sum }_{n = 0}^{N - 1} {s}_{λ , k , l , m} \left(n\right) δ \left(i-nM+m\right) , i = 1 - M , 2 - M , … , M \left(N-1\right) ,$ wherein
*N* represents the sequence length of the first sequence, *M* represents the transmission comb quantity, *n* represents the symbol position of the first sequence, *λ* represents the cubic term coefficient index of the cubic polynomial, *k* represents the Doppler domain cyclic shift index, *l* represents the delay domain cyclic shift index, m represents the transmission comb index, *δ*(*i*) represents an impulse function, and i represents a subcarrier number.

12. The method according to claim 11, wherein for a delay spread *τ* and a Doppler spread v that satisfy ∀*τ* ∈ [0, Δ_{T} - 1], ∀*v* ∈ [0, Δ_{F} - 1], the first signal comprises *s̅*_{*λ*₁*,k*₁*,l*₁,*m*₁}(*i*) and *s̅*_{*λ*₂*,k*₂*,l*₂,*m*₂}(*i*), and a cross-ambiguity function ${A}_{{\overline{s}}_{{λ}_{1} , {k}_{1} , {l}_{1} , {m}_{1}} , {\overline{s}}_{{λ}_{2} , {k}_{2} , {l}_{2} , {m}_{2}}} \left(τ, ν\right)$ of *s̅*_{*λ*₁*,k*₁*,l*₁,*m*₁}(*i*) and *s̅*_{*λ*₂*,k*₂*,l*₂,*m*₂}(*i*) satisfies: $\begin{matrix}\left|{A}_{{\overline{s}}_{{λ}_{1} , {k}_{1} , {l}_{1} , {m}_{1}} , {\overline{s}}_{{λ}_{2} , {k}_{2} , {l}_{2} , {m}_{2}}}\left(τ, ν\right)\right| = \\ \left\{\begin{matrix}N & {λ}_{1} = {λ}_{2} , {k}_{1} = {k}_{2} , {l}_{1} = {l}_{2} , {m}_{1} = {m}_{2} , τ = 0 , ν = 0 \\ 0 & \left[{λ}_{1}={λ}_{2},{k}_{1}={k}_{2},{m}_{1}={m}_{2},ν=0,\left({l}_{1}\neq {l}_{2}\right)∨\left(τ\neq 0\right)\right] ∨ \left[ν\neq \left({m}_{2}-{m}_{1}\right) mod M\right] \\ ≅ \sqrt{N} & {λ}_{1} = {λ}_{2} , \left({k}_{1}\neq {k}_{2}\right) ∨ \left({m}_{1}\neq {m}_{2}\right) ∨ \left(ν\neq 0\right) , ν = \left({m}_{2}-{m}_{1}\right) mod M \\ ≲ 2 \sqrt{N} & {λ}_{1} ≅ {λ}_{2} , ν = \left({m}_{2}-{m}_{1}\right) mod M\end{matrix}\right. .\end{matrix}$

13. The method according to any one of claims 5 to 12, wherein the method further comprises:
obtaining a first indication, wherein the first indication corresponds to the transmission comb index.

14. The method according to any one of claims 1 to 4, wherein the frequency domain position corresponds to a frequency division multiplexing index.

15. The method according to claim 14, wherein the cubic term coefficient of the cubic polynomial is $\frac{λ}{P}$, and the quadratic term coefficient of the cubic polynomial is $\frac{3 λ \left[\left(kMQ+mQ+q\right){Δ}_{F}-\left(mQ+q\right)\right]}{MQP}$, wherein
*P* is the maximum prime number that does not exceed the sequence length of the first sequence, *M* represents a frequency division multiplexing quantity, *Q* represents a frequency domain orthogonal cover code length, Δ_{F} represents the maximum Doppler spread, *q* represents a symbol position of a frequency domain orthogonal cover code, a value range of *q* comprises an integer greater than or equal to 0 and less than or equal to Q - 1, *λ* represents a cubic term coefficient index of the cubic polynomial, *k* represents a Doppler domain cyclic shift index, and m represents the frequency division multiplexing index.

16. The method according to claim 15, wherein the first sequence *s*_{*λ,k,l*,*r,m*}(*n, q)* satisfies: $\begin{matrix}{s}_{λ , k , l , r , m} \left(n, q\right) = {e}^{- j 2 π \left\{\frac{λ}{P}{n}^{3}+\frac{3 λ \left[\left(kMQ+mQ+q\right){Δ}_{F}-\left(mQ+q\right)\right]}{MQP}{n}^{2}+\frac{l {Δ}_{T}}{N}n+\frac{rq}{Q}\right\}} , n = 0 , 1 , … , N - 1 , q = \\ 0 , 1 , … , Q - 1 ,\end{matrix}$ wherein
*N* represents the sequence length of the first sequence, Δ_{T} represents the maximum delay spread, *n* represents a symbol position of the first sequence, *l* represents a delay domain cyclic shift index, and r represents a frequency domain orthogonal cover code index.

17. The method according to claim 16, wherein *λ* ∈ {1,2, ..., *P* - 1}, $\left(k∈\left\{0,1,…,\left⌊P/{Δ}_{F}\right⌋-\right.\right.$ $\left.1\right\} , m ∈ \left.\left\{0,1,…,M-1\right\}\right) ∨ \left(k∈\left\{\left⌊P/{Δ}_{F}\right⌋\right\},m∈\left\{0,1,…,\left⌊MP/{Δ}_{F}\right⌋-M\left⌊P/{Δ}_{F}\right⌋-1\right\}\right) , l ∈$ $\left\{0,1,…,\left⌊N/{Δ}_{T}\right⌋-1\right\} , r ∈ \left\{1,2,…,Q-1\right\}$, and V represents logical OR.

18. The method according to claim 17, wherein the maximum Doppler spread Δ_{F}, the frequency division multiplexing quantity M, and the frequency domain orthogonal cover code length Q satisfy: $3 \left({Δ}_{F}-1\right) / MQ ∈ ℤ ,$ wherein 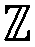 represents an integer.

19. The method according to any one of claims 14 to 18, wherein the first signal is obtained by performing frequency domain resource mapping on the first sequence based on the frequency division multiplexing index and the symbol position of the frequency domain orthogonal cover code.

20. The method according to claim 19, wherein the first signal *s̅*_{*λ,k,l*,*r,m*}(*i*) satisfies: $\begin{matrix}{\overline{s}}_{λ , k , l , r , m} \left(i\right) = {\sum }_{q = 0}^{Q - 1} {\sum }_{n = 0}^{N - 1} {s}_{λ , k , l , r , m} \left(n, q\right) δ \left(i-nMQ+mQ+q\right) , i = 1 - MQ , 2 - \\ MQ , … , MQ \left(N-1\right) ,\end{matrix}$ wherein
*N* represents the sequence length of the first sequence, *M* represents the frequency division multiplexing quantity, Q represents the frequency domain orthogonal cover code length, *s*_{*λ,k,l*,*r,m*}(*n, q)* represents the first sequence, *n* represents the symbol position of the first sequence, q represents the symbol position of the frequency domain orthogonal cover code, *λ* represents the cubic term coefficient index of the cubic polynomial, *k* represents the Doppler domain cyclic shift index, *l* represents the delay domain cyclic shift index, m represents the frequency division multiplexing index, *δ*(*i*) represents an impulse function, and *i* represents a subcarrier number.

21. The method according to claim 17, wherein for a delay spread *τ* and a Doppler spread v that satisfy ∀*τ* ∈ [0, Δ_{T} - 1], ∀*v* ∈ [0, Δ_{F} - 1], the first signal comprises *s̅*_{*λ*₁*,k*₁*,l*₁,*r*₁,*m*₁}(*i*) and *s̅*_{*λ*₂*,k*₂*,l*₂,*r*₂,*m*₂}(*i*)*,* and a cross-ambiguity function ${A}_{{\overline{s}}_{{λ}_{1} , {k}_{1} , {l}_{1} , {r}_{1} , {m}_{1}} , {\overline{s}}_{{λ}_{2} , {k}_{2} , {l}_{2} , {r}_{2} , {m}_{2}}} \left(τ, ν\right)$ of *s̅*_{*λ*₁*,k*₁*,l*₁,*r*₁,*m*₁}(*i*) and _{*λ*₂*,k*₂*,l*₂,*r*₂,*m*₂}(*i*)satisfies: 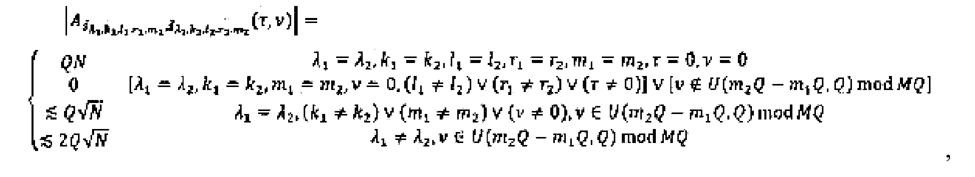 wherein
*U*(*m₂Q* - *m*₁*Q, Q)* represents an open interval (*m*₂Q *- m*₁*Q - Q, m*₂*Q - m*₁*Q + Q).*

22. The method according to any one of claims 14 to 21, wherein the method further comprises:
obtaining a second indication, wherein the second indication corresponds to the frequency division multiplexing index.

23. The method according to any one of claims 1 to 22, wherein the method further comprises:
obtaining a third indication, wherein the third indication indicates indication information of a sequence and at least one of a corresponding frequency domain orthogonal cover code index, delay domain cyclic shift index, transmission comb index, frequency division multiplexing index, Doppler domain cyclic shift index, cubic term coefficient index of the cubic polynomial, or time domain orthogonal cover code index, and the sequence comprises the first sequence.

24. The method according to any one of claims 1 to 23, wherein the method further comprises:
obtaining indication information of a second sequence, wherein the indication information of the first sequence and the indication information of the second sequence satisfy at least one of the following:
a frequency domain orthogonal cover code index corresponding to the indication information of the first sequence is different from a frequency domain orthogonal cover code index corresponding to the indication information of the second sequence;
a delay domain cyclic shift index corresponding to the indication information of the first sequence is different from a delay domain cyclic shift index corresponding to the indication information of the second sequence;
a time domain orthogonal cover code index corresponding to the indication information of the first sequence is different from a time domain orthogonal cover code index corresponding to the indication information of the second sequence;
a transmission comb index corresponding to the indication information of the first sequence is different from a transmission comb index corresponding to the indication information of the second sequence;
a frequency division multiplexing index corresponding to the indication information of the first sequence is different from a frequency division multiplexing index corresponding to the indication information of the second sequence;
a Doppler domain cyclic shift index corresponding to the indication information of the first sequence is different from a Doppler domain cyclic shift index corresponding to the indication information of the second sequence; or
a cubic term coefficient index of a cubic polynomial corresponding to the indication information of the first sequence is different from a cubic term coefficient index of a cubic polynomial corresponding to the indication information of the second sequence.

25. The method according to any one of claims 1 to 24, wherein the first signal corresponds to a first terminal device, and the method further comprises:
obtaining indication information of a third sequence corresponding to a second terminal device, wherein the first terminal and the second terminal belong to a same terminal device group.

26. A communication apparatus, comprising a unit or module configured to perform the method according to any one of claims 1 to 25.

27. A communication apparatus, comprising a processor, wherein the processor is configured to execute a computer program or instructions, to implement the method according to any one of claims 1 to 25.

28. A chip, wherein the chip comprises a logic circuit, and the logic circuit is configured to perform the method according to any one of claims 1 to 25.

29. A computer-readable storage medium, wherein the storage medium stores a computer program or instructions, and when the computer program or the instructions are executed by a communication apparatus, the method according to any one of claims 1 to 25 is implemented.

30. A computer program product, wherein when the computer program product is executed by a computer, the computer is caused to perform the method according to any one of claims 1 to 25.
